(19) Europäisches Patentamt
European Patent Office
Office européen des brevets

(11) EP 1 232 221 B1

(12) # EUROPÄISCHE PATENTSCHRIFT

(45) Veröffentlichungstag und Bekanntmachung des Hinweises auf die Patenterteilung:
**18.02.2009 Patentblatt 2009/08**

(21) Anmeldenummer: **00960473.7**

(22) Anmeldetag: **17.08.2000**

(51) Int Cl.:
***C09D 201/06*** *(2006.01)* ***C09D 7/00*** *(2006.01)*

(86) Internationale Anmeldenummer:
**PCT/EP2000/008033**

(87) Internationale Veröffentlichungsnummer:
**WO 2001/016243 (08.03.2001 Gazette 2001/10)**

(54) **LÖSEMITTELHALTIGER BESCHICHTUNGSSTOFF UND SEINE VERWENDUNG**

SOLVENT-CONTAINING COATING MATERIAL AND THE USE THEREOF

AGENT D'APPLICATION CONTENANT UN SOLVANT ET UTILISATION

(84) Benannte Vertragsstaaten:
**AT BE CH CY DE DK ES FI FR GB GR IE IT LI LU MC NL PT SE**

(30) Priorität: **27.08.1999 DE 19940855**

(43) Veröffentlichungstag der Anmeldung:
**21.08.2002 Patentblatt 2002/34**

(73) Patentinhaber: **BASF Coatings AG**
**48165 Münster (DE)**

(72) Erfinder:
- **RINK, Heinz-Peter**
  **48153 Münster (DE)**
- **MANGELS, Ines**
  **48165 Münster (DE)**
- **MIKOLAJETZ, Dunja**
  **48163 Münster (DE)**
- **MÖLLMANN, Margret**
  **48165 Münster (DE)**

(74) Vertreter: **Leifert, Elmar**
**Leifert & Steffan**
**Patentanwälte**
**Postfach 10 40 09**
**40031 Düsseldorf (DE)**

(56) Entgegenhaltungen:
**EP-A- 0 531 249**
**WO-A-00/14049**
**DE-A- 4 407 415**
**DE-A- 19 600 136**
**DE-C- 19 805 421**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 232 221 B1

**Beschreibung**

Die vorliegende Erfindung betrifft einen neuen lösemittelhaltigen Beschichtungsstoff. Des weiteren betrifft die vorliegende Erfindung die Verwendung des neuen lösemittelhaltigen Beschichtungsstoffs in der Automobilerst- und -reparaturlackierung, der industriellen Lackierung, inclusive Coil Coating, Container Coating und die Beschichtung elektrotechnischer Bauteile, der Kunststofflackierung und der Möbellackierung. Außerdem betrifft die vorliegende Erfindung die Verwendung des neuen lösemittelhaltigen Beschichtungsstoffs für die Herstellung neuer ein- oder mehrschichtiger klarer oder farb- und/oder effektgebender Lackierungen. Nicht zuletzt betrifft die vorliegende Erfindung Kraftfahrzeugkarosserien, industrielle Bauteile und Fertigprodukte, inklusive Coils, Container und elektrotechnische Bauteile, Formteile aus Kunststoff und Möbel, die mindestens eine dieser neuen Lackierungen aufweisen.

Sogenannte konventionelle Beschichtungsstoffe, d. h. lösemittelhaltige Beschichtungsstoffe, sind trotz aller Versuche, sie durch lösemittelfreie Beschichtungsstoffe zu ersetzen, für viele Anwendungszwecke nach wie vor unentbehrlich. Aus Gründen des Umweltschutzes und des sicherheitstechnischen Aufwands sind indes Hersteller und Anwender lösemittelhaltiger Beschichtungsstoffe bestrebt, den Anteil der Lösemittel an den Beschichtungsstoffen weiter abzusenken, d. h., hohe Feststoffgehalte zu erzielen. Von der Fachwelt werden solche Beschichtungsstoffe mit einem hohen Feststoffgehalt auch als "High-Solid-Lacke" bezeichnet.

Die Formulierung von High-Solid-Lacken ist insbesondere bei den technologisch bedeutsamen Zweikomponentenlacken, die bekanntermaßen über Polyisocyanate vernetzt werden, schwierig. So führen hohe Feststoffgehalte zu einer unerwünscht hohen Viskosität der Beschichtungsstoffe, die die Spritzapplikation erschwert, wenn nicht gar verhindert. Werden andererseits nur niedermolekulare und damit niedrigviskose Bestandteile verwendet, werden zumeist Beschichtungen mit einem unzureichenden Eigenschaftsprofil erhalten. Generell senkt der hohe Festkörpergehalt die Verarbeitungszeit solcher Beschichtungsstoffe in einem unerwünschten Ausmaß ab.

Dem konnte bis zu einem gewissen Grade durch die Verwendung von Reaktiverdünnern abgeholfen werden. Bei einem Reaktiverdünner handelt sich um ein reaktives Verdünnungsmittel oder Lösemittel, welches gemäß der Definition nach DIN 55945: 1996-09 bei der Filmbildung durch chemische Reaktion Bestandteil des Bindemittels wird. Bei der Verwendung üblicher und bekannter Reaktiverdünner beispielsweise in Beschichtungsstoffen können jedoch zusätzliche Probleme auftreten, wie die Anlösung weiterer Lackschichten bei der Applikation oder die Erniedrigung der Thermostabilität und der Lichtstabilität. Außerdem stellt die Zugabe von Reaktiverdünnem zu den Beschichtungsstoffen einen zusätzlichen Verfahrensschritt dar, was im Hinblick auf die Verfahrensökonomie grundsätzlich von Nachteil ist.

Es hat nicht an Versuchen gefehlt, High-Solid-Lacke zu formulieren, die den stetig wachsenden technologischen Ansprüchen gerecht werden sollten.

So gehen aus der europäischen Patentschrift EP-A-0 638 591 hydroxylgruppenhaltige Copolymerisate mit besonders niedriger Viskosität hervor, die durch radikalische Copolymerisation von Mischungen olefinisch ungesättigter Monomere, die cycloaliphatische Monomere enthalten, erhältlich sind. Die in den Copolymerisaten enthaltenen Hydroxylgruppen sind sterisch weniger gut zugänglich, so daß zwar eine längere Verarbeitbarkeit der betreffenden Zweikomponentenlacke resultiert, was jedoch durch eine Verlangsamung der Vernetzungsreaktion erkauft werden muß.

Die deutsche Patentschrift DE 44 07 415 beschreibt Beschichtungsmittel, die mindestens ein hydroxylgruppenhaltiges Polyacrylatharz und mindestens ein Vernetzungsmittel enthalten, wobei das hydroxylgruppenhaltige Polyacrylatharz, erhältlich ist, indem 5 bis 80 Gew.-% mindestens eines cycloaliphatischen Esters der (Meth)Acrylsäure, 10 bis 50 Gew.-% mindestens eines hydroxylgruppenhaltigen Alkylesters der (Meth)Acrylsäure, 0 bis 25 Gew.% mindestens eines weiteren, hydroxylgruppenhaltigen Monomeren, 5 bis 80 Gew.-% mindestens eines aliphatischen Esters der (Meth) Acrylsäure, 0 bis 40 New.-% mindestens eines Vinylaromaten und 0 bis 40 Gew: % mindestens eines weiteren Monomeren zu einem Polyacrylatharz mit einem $M_n$ von 1000 bis 5000, einem Verhältnis $M_w/M_n$ von weniger als 5,0 und einer OH-Zahl von 60 bis 180 polymerisiert werden.

Die deutsche Patentschrift DE 198 05 421 beschreibt Beschichtungsmittel, welche hydroxyfunktionelle Bindemittel, bestimmte Polyole, Vernetzungsmittel und übliche Zusatzstoffe enthält.

Die europäische Patentschrift EP-A-0 819 710 beschreibt Beschichtungsstoffe, insbesondere Zweikomponentenlacke, auf der Basis von Pfropfinischpolymerisaten und Polyisocyanaten. Die Pfropfmischpolymerisate wiederum basieren auf funktionalisierten Polyolefinen und Monoepoxiden und werden vorzugsweise bei hohen Temperaturen (150 bis 220 °C) hergestellt. Die Beschichtungsstoffe liefern jedoch Lackierungen, die hinsichtlich ihres Glanzes, ihrer Säurebeständigkeit, ihrer Kratzfestigkeit und ihres Verlaufs zu wünschen übrig lassen.

Die internationale Patentanmeldung WO 97/30099 beschreibt High-Solid-Lacke, die Aldimine und/oder Ketimine als Reaktivverdünner und Polyester mit sekundären Hydroxylgruppen als Bindemittel enthalten. Diese Beschichtungsstoffe liefern gute Lackierungen, indes müssen die Verarbeitungszeiten und die Einbrennbedingungen sehr genau eingehalten werden.

Des weiteren beschreibt die internationale Patentanmeldung WO 96/20968 High-Solid-Lacke, die hydroxyfunktionelle Copolymerisate und Oligoester, die durch die Umsetzung mindestens einer verzweigten Polycarbonsäure mit mindestens einem Monoepoxyester und/oder durch die Umsetzung eines Polyols mit einem Carbonsäureanhydrid

und die Umsetzung des resultierenden Zwischenpodukts mit einem Epoxid herstellbar sind. Auch die mit diesen bekannten Beschichtungsstoffen hergestellten Lackierungen müssen hinsichtlich ihres Glanzes, ihrer Säurebeständigkeit, ihrer Kratzfestigkeit und ihres Verlaufs weiter verbessert werden.

Der vorliegenden Erfindung lag die Aufgabe zugrunde, neue lösemittelhaltige Beschichtungsstoffe zu finden, die die Nachteile des Standes der Technik nicht mehr länger aufweisen, sondern bei einem hohen Feststoffgehalt eine niedrige Viskosität, eine allen Anwendungszwecken gerecht werdende Verarbeitungszeit, eine hohe Verarbeitungssicherheit, Standsicherheit sowie Kochersicherheit aufweisen. Die hiermit hergestellten neuen Beschichtungen, insbesondere die neuen ein- und mehrschichtigen klaren oder farb- und/oder effektgebenden Lackierungen, sollen ein ausgewogenes, sehr gutes Eigenschaftsprofil aufweisen und hinsichtlich ihres Glanzes, ihrer Säurebeständigkeit, ihrer Kratzfestigkeit und ihres Verlaufs allen Anforderungen des Marktes genügen. Darüber hinaus sollen die neuen Klarlackierungen sehr gut auf aus Wasserbasislacken hergestellten Basislackierungen haften und ein sehr gutes Reflow-Verhalten aufweisen.

Demgemäß wurde der neue lösemittelhaltige Beschichtungsstoff gefunden, der die folgenden Bestandteile enthält:

A) 5 bis 70 Gew,-%, bezogen auf den Feststoffgehalt des Beschichtungstoffs, mindestens eines Stoffgemischs, herstellbar, indem man

A1) eine Mischung aus olefinisch ungesättigten Monomeren, enthaltend

a1) 1 bis 90 Gew.-%, bezogen auf die Mischung (A1), mindestens eines cycloaliphtischen Monomeren und

a2) 0 bis 90 Gew.-%, bezogen auf die Mischung (A1), mindestens eines hydroxylgruppenhaltigen Monomeren,

wobei sich die Mengen der olefinisch ungesättigten Monomeren zu 100 Gew.-% addieren,
in mindestens einem hydroxylgruppenhaltigen Reaktivverdünner für thermisch härtbare reaktive Beschichtungsstoffe copolymerisiert, wobei die Reaktivverdünner bei Raumtemperatur flüssig sind;

B) 5 bis 70 Gew.-%, bezogen auf den Feststoffgehalt des Beschichtungsstoffs, mindestens eines hydroxylgruppenhaltigen Polyadditionsharzes (polyaddukt) eines zahlenmittleren Molekulargewichts Mn von 800 bis 3.500 sowie

C) 5 bis 70 Gew.-%, bezogen auf den Feststoffgehalt des Beschichtungsstoffs, mindestens eines Vernetzungsmittels für die thermische Vernetzung;

wobei sich die Mengen der Bestandteile (A), (B) und (C) zu 100 Gew.-% addieren.

Im folgenden wird der neue lösemittelhaltige Beschichtungsstoff als "erfindungsgemäßer Beschichtungsstoff" bezeichnet.

Außerdem wurde die neuen ein- und mehrschichtigen klaren oder farb- und/oder effektgebenden Lackierungen gefunden, die unter Verwerdung der erfindungsgemäßen Beschirhtungutoffe erhältlich sind und im folgenden zusammenfassend als "erfindungsgemäße Lackierungen" bezeichnet werden.

Nicht zuletzt wurden die neuen Kraftfahrzeugkarosserien, industriellen Bauteile und Fertigprodukte, inklusive Coils, Container und elektrotechnische Bauteile, Formteile aus Kunststoff und Möbel gefunden, welche mindestens eine erfindungsgemäße Lackierung aufweisen im folgenden zusammenfassend als "erfindungsgemäße Substrate" bezeichnet werden.

Im Hinblick auf den Stand der Technik war es überraschend und für den Fachmann nicht vorhersehbar, daß die der Erfindung zugrunde liegende Aufgabe mit Hilfe des erfindungsgemäßen Beschichtungsstoffs gelöst werden konnte. Insbesondere überraschte, daß der erfindungsgemäße Beschichtungsstoff sogar bei einem Feststoffgehalt von mehr als 70 Gew. -% nach wie vor für die Spritzapplikation sehr gut geeignet war und dabei sogar eine Verarbeimngszeit von mehr als zwei Stunden aufwies. Des weiteren überraschte, daß die erfindungsgemäße Klarlackierung in farb- und/ oder effektgebenden Mehrschichtlackierungen, die nach dem vorteilhaften Naßin-naß-Verfahren hergestellt worden waren, hervorragend auf den aus Wasserbasislacken hergestellten Basislackierungen haftete und dabei ein sehr gutes Reflow-Verhalten aufwies.

Der erfindungsgemäße Beschichtungsstoff ist ein Einkomponentensystem oder ein Zwei- Mehrkomponentensystem.

Im Rahmen der vorliegenden Erfindung ist unter einem Einkomponentensystem ein Beschichtungsstoffzu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Im Rahmen der vorliegenden Erfindung ist unter einem Zwei- oder Mehrkomponentensystem ein Beschichtungsstoffzu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Vorzugsweise ist mit der erfindungsgemäße Beschichtungsstoff ein Zweikomponentensystem.

Der erfindungsgemäße Beschichtungsstoff wird je nach Pigmentierung zur Herstellung transparenter Klarlackierungen und/oder zur Herstellung farb- und/oder effektgebende Basislackierungen verwendet. Besonders bevorzugt wird er zur Herstellung von Klarlackierungen, insbesondere im Rahmen des Naß-in-naß-Verfahrens oder der Autoreparaturlackierung angewandt.

Der erfindungsgemäße Beschichtungsstoff ist thermisch härtend oder er wird thermische und mit aktinischer Strahlung gehärtet (Dual Cure). In letzterem Falle enthalt der erfindungsgemäße Beschichtungsstoff übliche und bekannte Bestandteile die mit aktinischer Strahlung vernetzt werden können.

Unter aktinischer Strahlung ist elektromagnetische Strahlung wie nahes Infrarot (NIR), sichtbares Licht oder UV-Licht, insbesondere aber UV-Licht, sowie Korpuskularstrahlung wie Elektronenstrahlung zu verstehen.

Der erste wesentliche Bestandteil des erfindungsgemäßen Beschichtungsstoffs ist das Stoffgemisch (A).

Das Stoffgemisch (A) ist fest oder flüssig. Vorzugsweise ist es bei Raumtemperatur flussig. Es ist in dem erfindungsgemäße Beschichtungsstoffin einer Menge von 5 bis 70, vorzugsweise 10 bis 65, bevorzugt 12 bis 60, besonders bevorzugt 15 bis 55 und insbesondere 20 bis 50 Gew.-%, jeweils bezogen auf den Feststoffgehalt des Beschichtungsstoffs, enthalten.

Das Stoffgemisch (A) ist herstellbar, indem man eine Mischung (A1) aus olefinisch ungesättigten Monomeren (a) in mindestens einem hydroxylgruppenhaltigen Reaktivverdünner copolymerisiert.

Die Mischung (A1) enthält, jeweils bezogen auf die Mischung, 1 bis 90, vorzugsweise 2 bis 80, bevorzugt 3 bis 70, besonders bevorzugt 4 bis 60 und insbesondere 5 bis 50 Gew.-% mindestens eines cycloaliphatischen Monomeren (a1).

Das cycloaliphatische Monomere (a1) ist hydroxylgruppenhaltig mit mindestens einer Hydroxylgruppe pro Molekül oder hydroxylcruppenfrei. Die cycloaliphatischen Monomeren (a1) können allen Monomerklassen entstammen, solange sie eine cycloaliphatische Struktureinheit aufweisen. Beispiele geeigneter Monomerklassen sind cycloaliphatische Ester oder Amide von ethylenisch ungesättigten Carbonsäuren, insbesondere Acrylsäure, Methacrylsäure, Ethacrylsäure oder Crotonsäure; sowie cycloaliphatische Vinylester, Vinylether, N-Vinylamide, Allylester, Allylether oder Cycloolefine wie Cyclohexen, Cyclopenten, Norbonen, Cylopentadien und/oder Dicyclopentadien. Von diesen sind die cycloaliphatischen Ester und Amide von alpha, beta-ethylenisch ungesättigten Carbonsäuren besonders vorteilhaft und werden deshalb bevorzugt verwendet. Beispiele ganz besonders vorteilhafter Monomere (a1) dieser Art sind Cyclohexyl-, Isobornyl-, Dicyclopentadienyl-, Octahydro-4,7-methano-1H-inden-methanol- oder tert.-Butylcyclohexylacrylat, -methacrylat, -ethacrylat oder -crotonat oder 1,4-Bis(hydroxymethyl)cyclohexan-, Octahydro-4,7-methano-1H-inden-dimethanolmonoacrylat, -monomethacrylat, -monoethacrylat und/oder - monocrotonat; N-Cyclohexyl- oder N,N-Cyclohexylmethylamide der Acrylsäure, Methacrylsäure, Ethacrylsäure oder Crotonsäure. Des weiteren können höherfunktionelle cycloaliphatische Monomere (a1) wie 1,4-Bis(hydroxymethyl)cyclohexan-, Octahydro-4,7-methano-1 H-indendimethanoldiacrylat, -dimethacrylat, -diethacrylat und/oder -dicrotonat in untergeordneten Mengen mit verwendet werden. Im Rahmen der vorliegenden Erfindung sind hierbei unter untergeordneten Mengen an höherfunktionellen Monomeren solche Mengen zu verstehen, welche nicht zur Vernetzung oder Gelierung der resultierenden Copolymerisate führen.

Zusätzlich zu den hydroxylgruppenhaltigen cycloaliphatischen Monomeren (a1) kann die Mischung (A1), jeweils bezogen auf die Mischung, bis zu 90, vorzugsweise bis zu 80, bevorzugt bis zu 70, besonders bevorzugt bis zu 60 und insbesondere bis zu 50 Gew.-% eines sonstigen hydroxylgruppenhaltigen Monomeren (a2) mit mindestens einer Hydroxylgruppe pro Molekül enthalten. Die hydroxylgruppenhaltigen Monomeren (a2) entstammen den vorstehend genannten Monomerklassen. Beispiele besonders gut geeigneter hydroxylgruppenhaltiger Monomere (a2) sind Hydroxyalkylester der Acrylsäure, Methacrylsäure oder einer anderen alpha,beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure, Methacrylsäure, Ethacrylsäure oder Crotonsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat oder -crotonat; oder Methylpropandiolmonoacrylat, -monomethacrylat, - monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkylestern; oder olefinisch ungesättigte Alkohole wie Allylalkohol oder Polyole wie Trimethylolpropanmono- oder diallylether

oder Pentaerythritmono- -di- oder -triallylether. Diese höherfunktionellen Monomere (a2) werden in untergeordneten Mengen angewandt. Im Rahmen der vorliegenden Erfindung sind hierbei unter untergeordneten Mengen an höherfunktionellen Monomeren solche Mengen zu verstehen, welche nicht zur Vernetzung oder Gelierung der resultierenden Copolymerisate führen. Sofern verwendet, beträgt der Anteil an Trimethylolpropanmonoallylether hierbei 2 bis 10 Gew.-%, bezogen auf das Gesamtgewicht der zur Herstellung des Copolymerisats eingesetzten Monomeren (a). Daneben ist es aber auch möglich, 2 bis 10 Gew.-%, bezogen auf das Gesamtgewicht der zur Herstellung der Copolymerisate eingesetzten Monomeren (a), Trimethylolpropanmonoallylether zum fertigen Copolymerisat zuzusetzen. Die olefinisch ungesättigten Polyole, wie insbesondere Trimethylolpropanmonoallylether, können als alleinige hydroxylgruppenhaltige Monomere (a2), insbesondere aber anteilsmäßig in Kombination mit anderen der genannten hydroxylgruppenhaltigen Monomeren (a2), eingesetzt werden.

Darüber hinaus kann die Mischung (A1) weitere mit den vorstehend beschriebenen Monomeren (a1) und (a2) copolymerisierbare Monomere (a) enthalten.

Beispiele geeigneter weiterer copolymerisierbarer Monomere (a) sind

**Monomere (a3):**

(Meth)Acrylsäurealkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550; oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol- oder Hexan-1,6-diol-di(meth)acrylat; Trimethylolpropan-di- oder -tri(meth)acrylat; oder Pentaerythrit-di-, -tri- oder -tetra (meth)acrylat; enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Polyacrylatharze führen.

**Monomere (a4):**

Monomere mit mindestens einer Säuregruppe, vorzugsweise eine Carboxylgruppe, pro Molekül, insbesondere Acrylsäure und/oder Methacrylsäure. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Monomere (a4) verwendet werden. Als Monomere (a4) kommen desweiteren Maleinsäuremo-no(meth) acryloyloxyethylester, Bernsteinsäuremono(meth)acryloyloxyethylester und Phthalsäuremono(meth)acryloyloxyethylester in Betracht.

**Monomere (a5):**

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Beispiele ganz besonders bevorzugter Vinylester sind die Vinylester der Versatic®-Säuren, die unter dem Markennamen VeoVa® von der Firma Deutsche Shell Chemie vertrieben werden. Ergänzend wird auf Römpp Lexikon Lacke und Druckfarben, Georg Thieme Verlag, Stuttgart, New York, 1998, Seite 598 sowie Seiten 605 und 606, verwiesen.

**Monomere (a6):**

Umsetzungsprodukte aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen Cardura® erhältlich. Die Umsetzung der Acryl- oder Methacrylsäure mit dem Glycidylester einer Carbonsäure mit einem tertiären alpha-Kohlenstoffatom kann vorher, während oder nach der Copolymerisationsreaktion erfolgen. Bevorzugt wird als Monomer (a6) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird aufRömpp Lexikon Lacke und Druckfarben, Georg Thieme Verlag, Stuttgart, New York, 1998, Seiten 605 und 606, verwiesen.

**Monomere (a7):**

- Olefine wie Ethylen, Propylen, But-1-en, Pent-1-en, Hex-1-en, Butadien und/oder Isopren;
- (Meth)Acrylsäureamide wie (Meth)Acrylsäureamid, N-Methyl -, N,N-Dimethyl-, N-Ethyl-, N,N-Diethyl-, N-Propyl-, N, N-Dipropyl, N-Butyl-, N,N-Dibutyl-(meth)acrylsäureamid;
- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;
- vinylaromatische Kohlenwasserstoffe, wie Styrol, alpha-Alkylstyrole, insbesondere alpha-Methylstyrol, alpha-Arylstyrole, insbesondere 1,1-Diphenylethylen, und/oder Vinyltoluol;
- Nitrile wie Acrylnitril und/oder Methacrylnitril;
- Vinylverbindungen wie Vinylchlorid, Vinylfluorid, Vinylidendichlorid, Vinylidendifluorid; N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure; und/oder
- Polysiloxanmakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloxysilanenthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure.

Von den Monomeren (a7) werden vorzugsweise vinylaromatische Kohlenwasserstoffe, insbesondere Styrol, in einer Menge von weniger als 15 Gew.-%, bezogen auf die Mischung (A1), eingesetzt.

Erfindungsgemäß ist es von ganz besonderem Vorteil, die Monomeren derart auszuwählen, daß hydroxylgruppenhaltige Copolymerisate resultieren, die vorzugsweise eine OHZ von 100 bis 250, bevorzugt 130 bis 210, vorzugsweise Säurezahlen von 0 bis 80, bevorzugt 0 bis 50, ganz besonders bevorzugt 0 bis 15, vorzugsweise Glasübergangstemperaturen Tg von -25 bis +80 °C, bevorzugt -20 bis -40 °C. und vorzugsweise zahlenmittlere Molekulargewichte von 1.500 bis 30.000, bevorzugt 1.500 bis 15.000, ganz besonders bevorzugt 1.500 bis 5.000 (bestimmt durch Gelpermeationschromatographie mit Polystyrol als internem Standard) aufweisen Ganz besondere Vorteile resultieren, wenn die Monomeren derart ausgewahlt werden, daß als Copolymerisate Polyacrylatharze resultieren.

Die Glasubergangstemperatur Tg der Copolymerisate wird durch Art und Menge der eingesetzten Monomere (a1) und gegebenenfalls (a2) sowie gegebenenfalls (a3), (a4), (a5), (a6) und oder (a7) bestimmt. Die Auswahl der Monomeren kann vom Fachmann unter Zuhilfenahme der folgenden Formel von Fox, mit der die Glasubergangstemperaturen Tg von Copolymerisaten, insbesondere Polyacrylatharzen, näherungsweise berechnet werden können, vorgenommen werden:

$$1/Tg = \sum_{n=1}^{n=x} Wn/Tg_n; \qquad \sum_n W_n = 1$$

Tg = Glasübergangstemperatur des Polyacrytatharzes
$W_n$ = Gewichtsanteil des n-ten Monomers
$Tg_n$ = Glasübergangstemperatur des Homopolymers aus dem n-ten Monomer
x = Anzahl der verschiedenen Monomeren

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Für die vorliegende Erfindung ist es wesentlich, daß die vorstehend beschriebenen Monomere in mindestens einem Reaktiverdünner für thermisch härtbare reaktive Beschichtungsstoffe (co)polymerisiert werden.

Erfindungsgemäß kommen alle Reaktiverdünner als Reaktionsmedium in Betracht, welche bei den bekannten Vernetzungsreaktionen, die in den entsprechenden erfindungsgemäßen Beschichtungsstoffen ablaufen, in das Bindemittel eingebaut werden und welche die Copolymerisation der Monomeren nicht be- oder gar verhindern. Der Fachmann kann daher die jeweils geeigneten Reaktiverdünner mit Hilfe seines allgemeinen Fachwissens, gegebenenfalls unter Zuhilfenahme einfacher Vorversuche, auswählen.

Erfindungsgemäß sind diejenigen Reaktiverdünner von Vorteil, welche an der Vernetzung hydroxylgruppenhaltiger Verbindungen mit Verbindungen, welche gegenüber Hydroxylgruppen reaktive funktionelle Gruppen tragen, teilnehmen.

Demgemäß enthalten die erfindungsgemäß besonders bevorzugten Reaktiverdünner Hydroxylgruppen.

Beispiele erfindungsgemäß besonders bevorzugter Reaktiverdünner sind hyperverzweigten Verbindungen mit einer tetrafunktionellen Zentralgruppe, abgeleitet von Ditrimethylolpropan, Diglycerin und/oder Ditrimethylolethan, oder einer tetrafunktionellen Zentralgruppe der allgemeinen Formel I,

$$\mathbf{C\ [-A_q\text{-}X\text{-}]_m\ [-A_r\text{-}X\text{-}]_n\ [-A_s\text{-}X\text{-}]_o\ [-A_t\text{-}X\text{-}]_p} \qquad \text{(I)},$$

worin die Indices und die Variablen die folgende Bedeutung haben:
m+n-o+p=4, mit
m = eine ganze Zahl von 1 bis 3 und
n. o und p = 0 oder eine ganze Zahl von 1 bis 3;
q, r, s und t = eine ganze Zahl von 1 bis 5, wobei $q \geq r, s, t$, insbesondere $q > r, s, t$;

X = -O-, -S- oder -NH-;

A = $-CR_2-$;
mit R = -H, -F, -Cl, -Br, -CN, -NO2, $C_1$-$C_3$-Alkyl- oderHaloalkyl- oder $C_1$-$C_3$-Alkoxyrest oder - für q, r, s und/oder t = mindestens 2 - R = ein $C_2$-$C_4$-Alkandiyl- und/oder -Oxaalkandiylrest, welcher 2 bis 5 Kohlenstoffatome und/ oder ein Sauerstoffatom -O-, welches 3 bis 5 Kohlenstoffatome des Restes -A- überbrückt, aufweist.

Unter dem Begriff "abgeleitet" ist hierbei die gedankliche Abstraktion der Wasserstoffatome von den Hydroxylgruppen der Tetrole zu verstehen.

Erfindungsgemäß sind die Zentralgruppen I von Vorteil und werden deshalb besonders bevorzugt verwendet.

In der allgemeinen Formel I bezeichnen die Indizes q, r, s und t ganze Zahlen von 1 bis 5. Hierbei kann der Index q gleich den Indizes r, s und t sein. Unter dieser Rahmenbedingung resultieren symmetrische Zentralgruppen I.

Beispiele geeigneter erfindungsgemäß zu verwendender symmetrischer Zentralgruppen I leiten sich ab von symmetrischen Tetrolen wie Pentaerythrit, Tetrakis(2-hydroxyethyl)methan oder Tetrakis(3-hydroxypropyl)methan.

Erfindungsgemäß sind Zentralgruppen I, worin der Index q größer als die Indizes r, s und t ist und daher einen Wert von mindestens 2 hat, von Vorteil und werden deshalb ganz besonders bevorzugt verwendet. Unter dieser Rahmenbedingung resultieren asymmetrische Zentralgruppen I.

In der allgemeinen Formel I addieren sich dann die Indizes m, n, o und p auf 4. Der Index m ist stets größer

als 0 und steht für eine ganze Zahl von 1 bis 3, insbesondere für 1.

Die Indizes n, o und p haben unter Beachtung der vorstehenden Randbedingung den Wert 0 oder stehen für eine ganze Zahl von 1 bis 3. Dies bedeutet, daß nicht jeder dieser Indizes den Wert 0 annehmen kann.

Erfindungsgemäß sind folgende Wertekombinationen der Indizes von Vorteil:

m=1 und n,o,p=1;
m=1,n=2,o,p=1;
m=1,n=2,o=1 und p=0;
m=1,n=3,o,p=0;

m=2,n=1,o=1 und p=0;
m = 2, n=2 und o,p=0;

m=3,n=1 und o,p=0.

Von diesen sind die Zahlenkombinationen von besonderem Vorteil, in denen m = 1.

Erfindungsgemäß sind folgende Zahlenkombinationen der Indizes von Vorteil:

q = 2, r, s und/oder t = 1;
q = 3, r, s und/oder t = 1 und/oder 2;
q = 4, r, s und/oder t = 1, 2 und/oder 3;
q = 5, r, s und/oder t = 1, 2, 3 und/oder 4.

Die Variable -X- in der allgemeinen Formel I bezeichnet zweibindige Sauerstoffatome -O- oder Schwefelatome -S- oder eine sekundäre Aminogruppe - NH-. Erfindungsgemäß ist es von Vorteil, wenn -X- für -O- steht.

Die Variable -A- in der Formel I bedeutet einen zweibindigen Rest $-CR_2-$.

Der Rest R steht hierin für Wasserstoffatome -H, Fluoratome -F, Chloratome -Cl, Bromatome -Br, Nitrilgruppen -CN, Nitrogruppen $-NO_2$, $C_1$-$C_3$-Alkyl- oder - Haloalkylgruppen oder $C_1$-$C_3$-Alkoxygruppen. Beispiele geeigneter Gruppen dieser Art sind Methyl-, Ethyl-, Propyl-, Trifluormethyl-,Trichlormethyl-, Perfluorethyl-, Perfluorpropyl-, Methoxy-, Ethoxy- oder Propoxygruppen.

Erfindungsgemäß von Vorteil sind Wasserstoffatome oder Methylgruppen, welche daher bevorzugt verwendet werden. Insbesondere werden Wasserstoffatome verwendet. Bei den erfindungsgemäß besonders bevorzugten Variablen -A- handelt es sich demnach um Methylengruppen.

Steht in der allgemeinen Formel I mindestens einer der Indices q, r, s und/oder t mindestens für die Zahl 2 kann der Rest R auch für einen $C_2$-$C_4$-Alkandiyl- und/oder Oxaalkandiylrest stehen, welcher 2 bis Kohlenstoffatome des Restes -A- cyclisch überbrückt. Der Rest -R- kann indes auch für ein Sauerstoffatom -O- stehen, welches 3 bis 5 Kohlenstoffatome des Restes -A- cyclisch überbrückt. Hierdurch werden Cyclopentan-1,2- oder -1,3-diyl-Gruppen, Tetrahydrofuran-2,3-, -2,4-, -2,5-oder -3,4-diyl-Gruppen, Cyclohexan-1,2-, -1,3- oder -1,4-diyl-Gruppen oder Tetrahydropyran-2,3-, 2,4-, 2,5- oder 2,6-diylgruppen, indes keine Epoxidgruppen, gebildet.

Beispiele erfindungsgemäß ganz besonders vorteilhafter Zentralgruppen 1 leiten sich von den nachstehend beschriebenen Tetrolen der allgemeinen Formel II ab:

$$\mathbf{C\ [-A_q\text{-}XH]_m\ [-A_r\text{-}XH]_n\ [-A_s\text{-}XH]_o\ [-A_t\text{-}XH]_p} \qquad (II),$$

In der allgemeinen Formel II haben die Indizes und die Variablen dieselbe Bedeutung wie vorstehend bei der allgemeinen Formel I angegeben. Erfindungsgemäß ist es von besonderem Vorteil, wenn die Variable X ein Sauerstoffatom -O- darstellt.

Demgemäß sind für die Herstellung der Zentralgruppe I bzw. der erfindungsgemäß zu verwendenden Verbindungen die Tetrole der allgemeinen Formel II von besonderem Vorteil und werden deshalb besonders bevorzugt verwendet. Im folgenden werden sie der Kürze halber als "Tetrole II" bezeichnet.

Beispiele ganz besonders gut geeigneter erfindungsgemäß zu verwendender Tetrole II sind die symmetrischen Tetrole Pentaerythrit, Tetrakis(2-hydroxyethyl)methan oder Tetrakis(3-hydroxypropyl)methan oder die asymmetrischen Tetrole (II1) bis (II10):

$$HO\text{-}(\text{-}CH_2\text{-})_2\text{-}C(\text{-}CH_2\text{-}OH)_3, \qquad (II1)$$

$$HO\text{-}(\text{-}CH_2\text{-})_3\text{-}C(\text{-}CH\text{-}_2\text{-}OH)_3, \qquad (II2)$$

$HO-(-CH_2-)_4-C(-CH_2-OH)_3$, (II3)

$HO-(-CH_2-)_5-C(-CH_2-OH)_3$, (II4)

$[HO-(-CH_2-)_2-]_2C(CH_2-OH)_2$, (II5)

$[HO-(-CH_2-)_2-]_3C-CH_2-OH$, (II6)

$HO-(-CH_2-)_3-C[-(-CH_2-)_2-OH]_3$, (II7)

$HO-(-CH_2-)_3-C[-(-CH_2-)_2-OH]_2(-CH_2-OH)$, (II8)

$HO-(-CH_2-)_4-C(-CH_2-OH)\ [-(-CH_2-)_2-OH]\ [-(-CH_2-)_3-OH]$ (II9)

oder

$HO-(-CH_2-)_5-C(-CH_2-OH)\ [-(-CH_2-)_4-OH]\ 2$ (II10)

Von diesen ist das Tretrol (II1) (2,2-Bis-hydroxymethyl-butandiol-(1,4); Homopentaerythrit) besonders hervorzuheben, weil es den erfindungsgemäß zu verwendenden Reaktivverdünnern und damit den erfindungsgemäß zu verwendenden Stoffgemischen (A) ganz besonders vorteilhafte Eigenschaften vermittelt. Es wird deshalb ganz besonders bevorzugt verwendet.

In den erfindungsgemäß besonders bevorzugten Reaktivverdünnern sind die vorstehend beschriebenen Variablen -X- über Abstandshaltergruppen mit jeweils einer Hydroxylgruppe verbunden. Dies gilt sinngemäß auch für die Zentralgruppen, welche sich von den Tetrolen Ditrimethylolpropan, Diglycerin oder Ditrimethylolethan ableiten, deren Sauerstoffatome der Variablen -X- entsprechen. Die nachfolgende Beschreibung der Abstandshaltergruppen gilt daher auch für diese von den Zentralgruppen I verschiedenen Zentralgruppen.

Erfindungsgemäß sind als Abstandshaltergruppen alle zweibindigen organischen Reste $R^1$ geeignet.

Beispiele geeigneter zweibindigen Reste $R^1$ leiten sich von mindestens einer der folgenden organischen Verbindungen ab:

- Substituierte und unsubstiuierte, kein oder mindestens ein Heteroatom in der Kette und/oder im Ring enthaltende, lineare oder verzweigte Alkane, Alkene, Cycloalkane, Cycloalkene, Alkylcycloalkane, Alkylcycloalkene, Alkenylcycloalkane oder Alkenyleycloalkene,

- substituierte und unsubstituierte Aromaten oder Heteroamaten; sowie

- Alkyl-, Alkenyl-, Cycloalkyl-, Cycloalkenyl-, Alkylcyloalkyl-, Alkylcycloalkenyl-, Alkenylcycloalkyl- oder Alkenylcycloalkenylsubstitiuierte Aromaten oder Heteroaromaten, deren Substituenten substituiert oder unsubstituiert sind und kein oder mindestens ein Heteroatom in ihrer Kette und/oder ihrem Ring enthalten.

Beispiele geeigneter Heteroatome sind Sauerstoff -, Stickstoff -, Bor -, Silizium-, Schwefel- oder Phosphoratome.

Beispiele geeigneter Aromaten sind Benzol und Naphthalin.

Beispiele geeigneter Heteroaromaten sind Thiophen, Pyridin oder Triazin.

Beispiele geeigneter Alkane sind solche mit 2 bis 20 C-Atomen im Molekül wie Ethan, Propan, Butan, Isobutan, Pentan, Neopentan, Hexan, Heptan, Octan, Isooctan, Nonan, Dodecan, Hexadecan oder Eicosan.

Beispiele geeigneter Alkene sind Ethylen und Propylen.

Beispiele geeigneter Cycloalkane sind Cyclopentan und Cyclohexan.

Beispiele geeigneter Cycloalkene sind Cyclopenten und Cyclohexen.

Beispiele geeigneter Alkylcvcloalkane sind Methylcyclopentan und Methylcyclohexan.

Beispiele geeigneter Alkylcycloalkene sind Methylcyclopenten und Methylcvclohexen.

Beispiele geeigneter Alkenylcycloalkane sind Allyl- und Vinylcyclopentan und Allyl- und Vinylcyclohexan.

Beispiele geeigneter Alkenylcycloalkene sind Vinylcyclopenten und Vinylcyclohexen.

Beispiele geeigneter Alkyl-, Alkenyl-, Cycloalkyl-, Cycloalkenyl-, Alkylcyloalkyl-, All.ylcycloalkenyl-, Alkenylcycloalkyl- oder Alkenylcycloalkenylsubstituenten sind Methyl, Ethyl, Propyl, Isopropyl, n-Butyl, sec.-Butyl, tert.-Butyl, Vinyl, Allyl, Cyclohexyl, Cyclohexenyl, 4-Methylcyclohexyl, 4-Methylcyclohexenyl, 3-Allvlcvclohexenyl oder 4-Vinylcyclohexenyl.

Beispiele geeigneter erfindungsgemäß zu verwendender Substituenten für die Reste $R^1$ sind alle organischen Reste, welche im wesentlichen inert sind, d. h., daß sie keine Reaktionen mit den Verbindungen eingehen, welche für den Aufbau der erfindungsgemäß besonders bevorzugten Reaktiverdünnem oder für deren weitere Umsetzung verwendet werden, insbesondere Halogenatome, insbesondere Fluor- und Chloratome, Nitrogruppen, Nitrilgruppen oder Alkoxygruppen.

Die Abstandshaltergruppen sind insbesondere über Carbonylgruppen mit den Zentralgruppen 1 oder den Zentralgruppen, welche sich von den anderen genannten Tetrolen ableiten, verbunden.

Beispiele von organischen Verbindungen, welche sich für die Herstellung dieser Abstandshaltergruppen besonders gut eignen, sind epsilon-Caprolacton, Hexahydrophthalsäure, Hexahydrophthalsäureanhydrid, Phthalsäure, Phthalsäureanhydrid, Hexahydroterephthalsäure, Terephthalsäure, Fumarsäure, Maleinsäure, Maleinsäureanhydrid, Itaconsäure, Itaconsäureanhydrid, Oxalsäure, Malonsäure, Malonsäureanhydrid, Bernsteinsäure, Bernsteinsäureanhydrid, Glutarsäure, Glutarsäureanhydrid, Adipinsäure, Adipinsäureanhydrid, Pimelinsäure, Korksäure, Azelainsäure, Sebacinsäure oder Decan-, Undecan- oder Dodecandicarbonsäure. Von diesen sind epsilon-Caprolacton, Maleinsäure oder Maleinsäureanhydrid und Hexahydrophthalsäureanhydrid, insbesondere Hexahydrophthalsäureanhydrid, besonders gut geeignet und werden deswegen besonders bevorzugt verwendet.

Bei der Herstellung der besonders bevorzugten erfingdungsgemäß zu verwendenden Reaktiverdünner werden die Tetrole II oder die anderen genannten Tetrolen mit den vorstehend genannten difunktionellen Verbindungen zu einem Zwischenprodukt umgesetzt, in das die Hydroxylgruppen eingeführt werden können.

Hierfür kommen alle organischen Verbindungen in Betracht, welche mit den Zwischenprodukten unter Bildung einer Hydroxylgruppe oder unter Erhalt einer Hydroxylgruppe reagieren können. Erfindungsgemäß ist es von Vorteil, eine Verbindung zu verwenden, welche mit den Zwischenprodukten unter Bildung einer Hydroxylgruppe reagiert.

Beispiele gut geeigneter organischer Verbindungen dieser Art sind epoxidgruppenhaltige, insbesondere glycidylgruppenhaltige, Verbindungen.

Beispiele gut geeigneter epoxidgruppenhaltiger, insbesondere glycidylgruppenhaltiger, Verbindungen sind Ethylenoxid, Propylenoxid, Epichlorhydrin, Glycidol, Glycidylether, insbesondere Aryl- und Alkylglycidylether, oder Glycidylester, insbesondere die Glycidylester von tertiären, stark verzweigten, gesättigten Monocarbonsäuren, welche unter dem Handelsnamen Versatic®-Säuren von der Firma Deutsche Shell Chemie vertrieben werden. Von diesen sind die Versatic®-Säureglycidylester ganz besonders vorteilhaft und werden deshalb ganz besonders bevorzugt verwendet.

Für die vorliegende Erfindung ist es wesentlich, daß die vorstehend beschriebenen Reaktiverdünner bei Raumtemperatur flüssig sind. Somit können entweder einzelne flüssige hyperverzweigte Verbindungen verwendet werden oder flüssige Gemische dieser Verbindungen. Dies ist insbesondere dann der Fall, wenn hyperverzweigte Verbindungen verwendet werden, welche wegen ihres hohen Molekulargewichts und/oder ihrer Symmetrie als einzelne Verbindungen fest sind. Der Fachmann kann daher die entsprechenden hyperverzweigten Verbindungen in einfacher Weise auswählen.

Die Herstellung der erfindungsgemäß besonders bevorzugten Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele erfindungsgemäß bevorzugter Reaktivverdünner sind die in der internationalen Patentanmeldung WO 96/20968 beschriebenen verzweigten Umsetzungsprodukte von verzweigten Polycarbonsäuren mit mindestens einem Monoepoxyester.

Weitere Beispiele erfindungsgemäß besonders bevorzugter Reaktiverdünner sind die cyclischen und/oder acyclischen $C_9$-$C_{16}$-Alkane, die mit mindestens zwei Hydroxyl- oder mindestens einer Hydroxyl- und mindestens einer Thiolgruppe funktionalisiert sind, und der Kürze halber im folgenden als "funktionalisierte Alkane " bezeichnet werden.

Die funktionalisierten Alkane leiten sich ab von verzweigten, cyclischen oder acyclischen Alkanen mit 9 bis 16 Kohlenstoffatomen, welche jeweils das Grundgerüst bilden.

Beispiele geeigneter Alkane dieser Art mit 9 Kohlenstoffatomen sind 2-Methyloctan, 4-Methyloctan, 2,3-Dimethyl-heptan, 3,4-Dimethyl-heptan, 2,6-Dimethyl-heptan, 3,5-Dimethyl-heptan, 2-Methyl-4-ethyl-hexan oder Isopropylcyclohexan.

Beispiele geeigneter Alkane dieser Art mit 10 Kohlenstoffatomen sind 4-Ethyloctan, 2,3,4,5-Tetramethyl-hexan, 2,3-Diethyl-hexan oder 1-Methyl-2-n-propyl-cyclohexan.

Beispiele geeigneter Alkane dieser Art mit 11 Kohlenstoffatomen sind 2,4,5,6-Tetramethyl-heptan oder 3-Methyl-6-ethyl-octan.

Beispiele geeigneter Alkane dieser Art mit 12 Kohlenstoffatomen sind 4-Methyl-7-ethyl-nonan, 4,5-Diethyloctan, 1 '-Ethyl-butyl-cyclohexan, 3,5-Diethyl-octan oder 2,4-Diethyl-octan.

Beispiele geeigneter Alkane dieser Art mit 13 Kohlenstoffatomen sind 3,4-Dimethyl-5-ethyl-nonan oder 4,6-Dimethyl-5-ethyl-nonan.

Ein Beispiel eines geeigneten Alkans dieser Art mit 14 Kohlenstoffatomen ist 3,4-Dimethyl-7-ethyl-decan.

Beispiele geeigneter Alkane dieser Art mit 15 Kohlenstoffatomen sind 3,6-Diethylundecan oder 3,6-Dimethyl-9-ethyl-undecan.

Beispiele geeigneter Alkane dieser Art mit 16 Kohlenstoffatomen sind 3,7-Diethyldodecan oder 4-Ethyl-6-isopropyl-undecan.

Von diesen Grundgerüsten sind die Alkane mit 10 bis 14 und insbesondere 12 Kohlenstoffatomen besonders vorteilhaft und werden deshalb bevorzugt verwendet. Von diesen sind wiederum die Octanderivate, insbesondere die stellungsisomeren Diethyloctandiole, ganz besonders vorteilhaft.

Für die vorliegende Erfindung ist es wesentlich, daß die funktionalisierten Alkane, welche sich von diesen verzweigten, cyclischen oder acyclischen Alkanen als Grundgerüsten ableiten, bei Raumtemperatur flüssig sind. Somit können entweder einzelne flüssige funktionalisierte Alkane verwendet werden oder flüssige Gemische dieser Verbindungen. Dies ist insbesondere dann der Fall, wenn funktionalisierte Alkane verwendet werden, welche wegen ihrer hohen Anzahl an Kohlenstoffatomen im Alkan-Grundgerüst als einzelne Verbindungen fest sind. Der Fachmann kann daher die entsprechenden funktionalisierten Alkane oder die Reaktivverdünner in einfacher Weise auswählen.

Fur die Erfindung ist es außerdem wesentlich, daß die funktionalisierten Alkane einen Siedepunkt von über 200, vorzugsweise 220 und insbesondere 240 °C aufweisen. Darüberhinaus sollen sie eine niedrige Verdampfungsrate haben.

Erfindungsgemäß ist es außerdem von Vorteil, wenn die funktionalisierten Alkane acyclisch sind.

Die funktionalisierten Alkane weisen primäre und/oder sekundäre Hydroxlgruppen oder primare und/oder sekundäre Hydroxlgruppen und Thiolgruppen auf. Erfindungsgemäß ist es von Vorteil, wenn primäre und sekundäre Gruppen dieser Art in einem funktionalisierten Alkan vorhanden sind.

Bei den funktionalisierten Alkanen handelt es sich demnach um Polyole oder um Polyol-polythiole. insbesondere aber Polyole. Diese Verbindungen können einzeln oder gemeinsam als Gemische verwendet werden. Besondere Vorteil ergeben sich, wenn die Polyole Diole und/oder Triole, insbesondere aber Diole sind. Sie werden deshalb ganz besonders bevorzugt verwendet.

Die erfindungsgemäß ganz besonders bevorzugt zu verwendenden stellungsisomeren Diethyloctandiole enthalten eine lineare $C_8$-Kohlenstoffkette.

Bezüglich der beiden Ethylgruppen weist die Cs-Kohlenstoffkette das folgende Substitutionsmuster auf: 2,3, 2,4, 2,5, 2,6, 2,7, 3,4, 3,5, 3,6 oder 4,5. Erfindungsgemäß ist es von Vorteil, wenn die beiden Ethylgruppen in 2,4-Stellung stehen d h., daß es sich um 2,4-Diethyloctandiole handelt.

Bezüglich der beiden Hydroxylgruppen weist die $C_8$-Kohlenstoffkette das folgende Substitutionsmuster auf: 1,2, 1,3, 1,4, 1,5, 1,6, 1,7, 1,8, 2,3, 2,4, 2,5, 2,6, 2,7, 2,8, 3,4, 3,5, 3,6, 3,7, 3,8, 4,5, 4,6, 4,8, 5,6, 5,7, 5,8, 6,7, 6,8 oder 7,8. Erfindungsgemäß ist es von Vorteil, wenn die beiden Hydroxylgruppen in 1,5-Stellung stehen, d. h., daß es sich um Diethyloctan-1,5-diole handelt.

Die beiden Substitutionsmuster werden in beliebiger Weise miteinander kombiniert, d. h., daß es sich bei den erfindungsgemäß zu verwendenden Diethyloctandiolen um

2,3-Diethyloctan-1,2-, -1,3-, -1,4-, -1,5-, -1,6-, -1,7-, -1,8-, -2,3-, -2,4-, -2,5 -, -2,6-, - 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder-7,8-diol,

2,4-Diethyloctan-1,2-, -1,3-, -1,4-, -1,5-, -1,6-, -1,7-, -1,8-, -2,3-, -2,4-, -2,5 -, -2,6-, - 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder-7,8-diol,

2,5-Diethyloctan-1,2-, -1,3-, -1,4-, -1,5-, -1,6-, -1,7-, -1,8-, -2,3-, -2,4-, -2,5 -, -2,6-, 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder-7,8-diol,

2,6- Diethyloctan-1,2-, -1,3-, -1,4-, -1,5-, -1,6-, -1,7-, -1,8-, -2,3-, -2,4-, -2,5 -, -2,6-, - 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder-7,8-diol,

2,7- Diethyloctan-1,2-, -1,3-, -1,4-, -1,5-, -1,6-, -1,7-, -1,8-, -2,3-, -2,4-, -2,5 -, -2,6-, - 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder-7,8-diol,

3,4-Diethyloctan-1,2-, -1,3-, -1,4-, -1,5-, -1,6-, -1,7-, -1,8-, -2,3-, -2,4-, -2,5 -, -2,6-, - 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder-7,8-diol,

3,5-Diethyloctan-1,2-, -1,3-, -1,4-, -1,5-, -1,6-, -1,7-, -1,8-, -2,3-, -2,4-, -2,5 -, -2,6-, - 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder -7,8-diol,

3,6-Diethyloctan-1,2-, -1,3-, -1,4-, -1,5-, -1,6-, -1,7-, -1,8-, -2,3-, -2,4-, -2,5 -, -2,6-, 2,7-, -2,8-, -3,4-, -3,5-, -3,6-, -3,7-, -3,8 -, -4,5-, -4,6-, -4,7-, -4,8-, -5,6 -, -5,7-, -5,8-, 6,7-, -6,8- oder -7,8-diol oder um

4.5-Diethyloctan-1,2-, -1,3-, -1,4-, -1,5-, -1,6-, -1,7-, -1,8-, -2,3-, -2,4-, -2,5 -, -2,6-, - 2,7-, -2,8-, -3,4-, -3,5-, -3,6-, -3,7-, -3,8 -, -4,5-, -4,6-, -4,7-, -4,8-, -5,6 -, -5,7-, -5,8-, - 6,7-, -6,8- oder-7,8-diol

handelt.

Die erfindungsgemäß zu verwendenden stellungsisomeren Diethyloctandiole können als einzelne Verbindungen oder als Gemische von zwei oder mehrDiethyloctandiolen für die Herstellung der erfindungsgemäßen Oligomeren und Polymeren verwendet werden.

Besondere Vorteile resultieren aus der Verwendung von 2,4-Diethyloctan-1,5-diol.

Die vorstehend beschriebenen Reaktivverdünner sind an sich bekannte Verbindungen und können mit Hilfe üblicher und bekannter Synthesemethoden der Organischen Chemie wie die basenkatalysierte Aldolkondensation hergestellt werden oder sie fallen als Nebenprodukte chemischer Großsynthesen wie der Herstellung von 2-Ethyl-hexanol an.

Weitere Beispiele erfindungsgemäß besonders bevorzugter Reaktivverdünner werden erhalten, indem Oligomere der Formel III,

$$R^3R^4C=[=CH-R^2-CH=]_v=CR^5R^6 \qquad (III),$$

| | |
|---|---|
| worin $R^2$ | $= -(-CH_2-)_w-$,<br>worin der Index w eine ganze Zahl von 1 bis 6 bedeutet, |
| oder | = |
| | 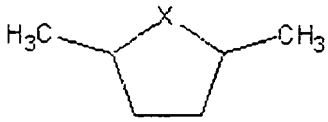 |
| | worin X = $-CH_2-$ oder ein Sauerstoffatom, |
| $R^3$, $R^4$, $R^5$ und $R^6$ unabhängig voneinander | = Wasserstoffatome oder Alkyl; und |
| Index v | = eine ganze Zahl von 1 bis 15, |

hydroformyliert und die hierbei resultierenden aldehydgruppenhaltigen Produkte III zu den Polyolen III reduziert werden, welche gegebenenfalls teilweise oder vollständig hydriert werden.

Der Index v in der Formel III steht für die Anzahl der zweiwertigen Reste $R^2$, welche in die von cyclischen Olefinen wie beispielsweise Cyclopropen, Cyclopenten, Cyclobuten, Cyclohexen, Cyclohepten, Norbonen, 7-Oxanorbonen oder Cyclooсten abgeleiteten Oligomere I durch ringöffnende Metathesereaktion eingerührt wurden. Vorzugsweise weisen die erfindungsgemäß einsetzbaren Oligomergemische in bei einem möglichst großen Anteil, wie z.B. mindestens 40 Gew.% (ermittelt durch die Flächenintegration der Gaschromatogramme; Gerät: Hewlett Packard; Detektor: Flammenionisations-Detektor; Säule; DB 5,30 m x 0,32 mm, Belegung 1$\mu$; Temperaturprogramm: 60°C 5 min, isotherm, Heizrate 10°C/min Max: 300° C), einen Wert von v > 1 auf. Der Wert v und somit der Grad der ringöffnenden Metathese kann, wie weiter unten ausgeführt, durch die Aktivität des verwendeten Metathesekatalysators beeinflußt werden.

Die Reste $R^3$, $R^4$, $R^5$ und $R^6$ stehen unabhängig voneinander für Wasserstoff oder Alkyl, wobei der Ausdruck "Alkyl" geradkettige und verzweigte Alkylgruppen umfaßt.

Vorzugsweise handelt es sich dabei um geradekettige oder verzweigte $C_1$-$C_{15}$-Alkyl-, bevorzugt $C_1$-$C_{10}$-Alkyl, insbesondere bevorzugt $C_1$-$C_5$-Alkylgruppen. Beispiele für Alkylgruppen sind insbesondere Methyl, Ethyl, Propyl, 1-Methylethyl, Butyl, 1-Methylpropyl, 2-Methylpropyl 1,1-Dimethylethyl. n-Pentyl, 1-Methylbutyl, 2-Methylbutyl, 3-Methylbutyl, 1-2.Dimenthylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylpropyl, 1,2,2-Trimethylpropyl. 1-Ethylbutyl, 2-Ethylbutyl, 1-Ethyl-2-Methylpropyl, n-Heptyl, 1-Methylhexyl, 1-Ethylpentyl, 2-Ethylpentyl, 1-Propylbutyl, Octyl, Decyl, Dodecyl, etc.

Der Verzweigungsgrad und die Anzahl der Kohlenstoffatome der endständigen Alkylreste $R^3$, $R^4$, $R^5$ und $R^6$ hängen von der Struktur der acyclischen Monoolefine des verwendeten Kohlenwasserstoffgemisches und der Aktivität des Katalysators ab. Wie im folgenden genauer beschrieben wird, beinflußt die Aktivität des Katalysators den Grad der Kreuzmetathese (Selbstmetathese) der acyclischen Olefine unter Bildung strukturell neuer Olefine, in die sodann formal Cyclopenten im Sinne einer ringöffnenden Metathesepolymerisation insertiert wird.

Vorzugsweise werden Oligomerengemische eingesetzt, die einen erhöhten Anteil am Oligomeren mit nur einer terminalen Doppelbindung aufweisen. Das Oligomer wird vorzugsweise hergestellt, indem man ein ein cyclisches Monoolefin wie Cyclopropen, Cyclobuten, Cyclopenten, Cyclohexen, Cyclohepten, Cyclooсten, Norbonen oder 7-Oxanorbonen sowie acyclische Monoolefine enthaltendes Kohlenwasserstoffgemisches aus der Erdölverarbeitung durch Crak-

ken (Cs-Schnitt) in einer homogenen oder heterogenen Metathesereaktion umsetzt.

Die Metathesereaktion umfaßt formal

a) die Disproportionierung der acyclischen Monoolefine des Kohlenwasserstoffgemisches durch Kreuzmetathese,

b) die Oligomerisation des cyclischen Monoelefins durch ringöffnende Metathese,

c) den Kettenabbruch durch Umsetzung der Oligomere aus b) mit einem acyclischen Olefin des Kohlenwasserstoffgemisches oder eines Produktes aus a),

wobei die Schritte a) und/oder b) und/oder c) mehrmals für sich alleine oder in Kombination durchlaufen werden können.

Schritt a)

Die Kreuzmetathese der acyclischen Monoolefine soll am Beispiel der Metathese von 1 -Penten und 2-Penten erläutert werden:

$$CH_2{=}CH-C_3H_7 \;+\; CH_3-CH{=}CH-C_2H_5 \;\rightleftharpoons\; \text{Propen} + \text{1-Buten} + \text{2-Hexen} + \text{3-Hepten}$$

Durch Kombination aus Kreuzmetathese verschiedener und Selbstmethathese gleicher acyclischer Olefine, wie z.B. der Selbstmetathese von 1-Penten zu Ethen und 4-Octen sowie durch mehrmaliges Durchlaufen dieser Reaktion werden eine Vielzahl von Monoolefinen mit unterschiedlicher Struktur und Kohlenstoffatomanzahl erhalten, die die Endgruppen der Oligomeren I bilden. Über den Anteil an Kreuzmetatheseprodukten, die mit steigender Aktivität des verwendeten Katalysators zunimmt, wird auch der Doppelbindungsantell der Oligomeren beeinflußt. So wird z.B. bei der zuvor beschriebenen Selbstmethathese von 1-Penten Ethen freigesetzt, welches gegebenenfalls gasförmig entweichen kann, wobei ein Doppelbindungsäquivalent der Umsetzung entzogen wird. Gleichzeitig steigt der Anteil an Oligomeren ohne terminale Doppelbindungen. So wird in dem obigen Beispiel z.B. durch Insertion von cyclischem Monoolefin in 4-Octen ein Oligomer ohne terminale Doppelbindungen gebildet.

Schritt b)

Die durchschnittliche Anzahl an Insertionen des cyclischen Monoolefins in die wachsende Kette im Sinne einer ringöffnenden Metathesepolymerisation bestimmt das mittlere Molekulargewicht des gebildeten Oligomerengemisches III. Vorzugsweise werden durch das erfindungsgemäße Verfahren Oligomerengemische 1 mit einem mittleren Molekulargewicht von mindestens 274 g pro Mol gebildet, was einer durchschnittlichen Anzahl von drei Einheiten eines cyclischen Monoolefins pro Oligomer entspricht.

Schritt c)

Der Kettenabbruch erfolgt durch Umsetzung von Oligomeren, welches noch ein aktives Kettenende in Form eines Katalysatorkomplexes (Alkylidenkomplexes) aufweist, mit einem acyclischen Olefin, wobei im Idealfall ein aktiver Katalysatorkomplex zurückgewonnen wird. Dabei kann das acyclische Olefin unverändert aus dem ursprünglich zur Reaktion eingesetzten Kohlenwasserstoffgemisch stammen oder zuvor in einer Kreuzmetathese nach Stufe a) modifiziert worden sein.

Das Verfahren eignet sich ganz allgemein zur Herstellung von Oligomeren III aus Kohlenwasserstoffgemischen, die acyclische und cyclische Monoolefine enthalten. Monoolefine wie z.B. Cyclobuten, Cyclopenten, Cyclohexen, Cyclohepten, Norbonen oder 7-Oxanorbonen, insbesondere Cyclopenten. Varianten dieses Verfahrens werden beispielsweise in dem Artikel von M. Schuster und S. Bleckert in Angewandte Chemie, 1997, Band 109, Seiten 2124 bis 2144, beschrieben.

Vorzugsweise wird ein bei der Erdölverarbeitung großtechnisch anfallendes Kohlenwasserstoffgemisch verwendet, das gewünschtenfalls zur Entfernung von Dienen zuvor einer katalytischen Teilhydrierung unterzogen werden

kann. Besonders geeignet für die Verwendung im vorliegenden Verfahren ist z.B. ein an gesättigten und ungesättigten $C_5$-Kohlenwasserstoffen angereichertes Gemisch ($C_5$-Schnitt). Zur Gewinnung des $C_5$-Schnittes kann z.B. beim Steamcracken von Naphtha anfallendes Pyrolysebenzin zuerst einer Selektivhydrierung unterzogen werden, um die enthaltenen Diene und Acetylene selektiv in die entsprechenden Alkane und Alkene zu überführen und anschließend einer fraktionierten Destillation unterworfen werden, wobei zum einen der für weitere chemische Synthesen wichtige $C_6$-$C_8$-Schnitt, der die aromatischen Kohlenwasserstoffe enthält, als auch der für das erfindungsgemäße Verfahren verwendete $C_5$-Schnitt anfallen.

Der $C_5$-Schnitt weist im allgemeinen einen Gesamtolefingehalt von mindestens 30 Gew.-%, bevorzugt mindestens 40 Gew.-%, insbesondere mindestens 50 Gew.-% auf.

Geeignet sind dabei $C_5$-Kohlenwasserstoffgemische mit einem Cyclopentengesamtgehalt von mindestens 5 Gew.%, bevorzugt mindestens 10 Gew.-%, insbesondere mindestens 12 Gew.-%, und im allgemeinen nicht mehr als 30 Gew.%, vorzugsweise nicht mehr als 20 Gew.%.

Des weiteren weisen geeignete $C_5$-Kohlenwasserstoffgemische einen Anteil von Pentenisomeren an den acyclichen Monoolefinen von mindestens 70 -Gew.-% bevorzugt mindestens 80 Gew.-%, insbesondere mindestens 90 Gew.-% auf.

Das Herstellungsverfahren kann auch als großtechnisch anfallender $C_5$-Schnitt mit einem Gesamtolefinanteil von z.B. 50 bis 60 Gew.-%, wie etwa 56 %, einem Cyclopentenanteil von z.B. 10 bis 20 Gew.-%, wie etwa 15 Gew.% und einem Anteil an Pentenisomeren von z.B. 33 bis 43 Gew.-%, wie etwa 38 Gew.-%, wobei etwa 16 Gew.-% auf das n-Penten und etwa 22 Gew.-% auf isomere Pentene entfallen, ausgeführt werden.

Nach einer speziellen Ausführungsform wird bei dem Herstellungsverfahren ein Kohlenwasserstoffgemisch verwendet, welches den $C_5$-Schnitt und eine acyclische $C_4$-Olefine enthaltende Erdölfraktion (Raffinat-2) umfaßt.

Nach einer anderen speziellen Ausführungsform des Herstellungsverfahrens wird ein Kohlenwasserstoffgemisch verwendet, welches den $C_5$-Schnitt und Ethen umfaßt. Dabei werden Oligomerengemische III mit einem erhöhten Doppelbindungsanteil erhalten. Dies wird zum einen durch Ethenolyse der im $C_5$-Schnitt enthaltenen acyclischen n- und iso-Pentene zu kürzerkettigen $\alpha$-Olefinen, wie Propen und 1-Buten, erreicht, die mit Cyclopenten in einer ringöffnenden Metathesereaktion unter Bildung von Oligomeren III mit jeweils einer terminalen Doppelbindung reagieren. In Gegenwart von Ethen wird auch die Selbstmetathese der acyclischen Olefine unter Bildung weiteren Ethens, wie z.B. die Selbstmetathese von 1-Penten zu Ethen und 4-Octen, welches als Kettenabbruchreagenz zu Produkten ohne terminale Doppelbindungen führt, unterdrückt. Zum anderen wird eine weitere Erhöhung des Doppelbindungsanteils durch die Ethenolyse von Cyclopenten mit Ethen zu 1,6-Heptadien erzielt. Dabei entstehen Oligomerenfolgen, die jeweils über zwei terminale Doppelbindungen verfügen. Vorzugsweise resultieren bei einer Verwendung der so erhaltenen Oligomerengemische III mit erhöhtem Doppelbindungsanteil zur Funktionalisierung Oligomerengemische III mit erhöhter Funktionalitätsdichte.

Geeignete Katalysatoren für die Metathese sind nach dem Stand der Technik bekannt und umfassen homogene und heterogene Katalysatorsysteme. Im allgemeinen basieren die für das Herstellungsverfahren geeigneten Katalysatoren auf einem Übergangsmetall der 6., 7. oder 8. Nebengruppe des Periodensystems, wobei vorzugsweise Katalysatoren auf Basis von Mo, W, Re und Ru verwendet werden.

Geeignete homogene Katalysatorsysteme sind im allgemeinen Übergangsmetallverbindungen, die gegebenenfalls in Kombination mit einem Cokatalysator und/oder gegebenenfalls in Gegenwart der Olefinedukte befähigt sind, einen katalytisch aktiven Metallcarbenkomplex zu bilden. Solche Systeme werden z.B. von R H. Grubbs in Comprehensive Organometallic Chemistry, Pergamon Press, Ltd., New York, Band 8, Seite 499 ff. (1982) beschrieben.

Geeignete Katalysator/Cokatalysator-Systeme auf W-, Mo- und Re-Basis können z.B. mindestens eine lösliche Übergangsmetallverbindung und ein alkylierendes Agens umfassen. Dazu zählen z.B. $MoCl_2 (NO)_2(PR_3)_2/Al_2(CH_3)_3Cl_3$; $WCl_6/BuLi$; $WCl_6/EIAlCl_2(Sn(CH_3)_{4)}/EtOH$; $WOCl_4/Sn(CH_3)_4$; $WOCl_2(O\text{-}[2,6\text{-}Br_2\text{-}C_6H_3]/Sn(CH_3)_4$; $CH_3ReO_3/C_2H_5AlCl_2$, wobei die vier letztgenannten für das erfindungsgemäße Verfahren bevorzugt sind.

Weitere als Metathese-Katalysatoren geeignete Übergangsmetall-AlkylidenKomplexe werden von R. R. Schrock in Accounts of Chemical Research, Band 23, Seite 158 ff (1990) beschrieben. Allgemein handelt es sich um vierfach koordinierte Mo- und W-Alkylidenkomplexe, die zusätzlich zwei sperrige Alkoxy- und einen Imido-Liganden aufweisen. Dabei werden für das erfindungsgemäße Verfahren bevorzugt $((CH_3)_3CO)_2Mo(=N\text{-}[2,6\text{-}(i\text{-}C_3H_7)_2\text{-}C_6H_3])$ (=$CHC(CH_3)_2C_6H_5$) und $[(CF_3)_2C(CH_3)O]_2Mo(=N\text{-}[2,5\text{-}(i\text{-}C_3H_7)\text{-}C_6H_3])$ (=$CH(CH_3)_2C_6H_5$) verwendet.

Insbesondere werden als homogene Metathesekatalysatoren die Katalysatoren verwendet, die in der Angewandte Chemie, Band 107, Seiten 2179 ff. (1995), in Journal of the American Chemical Society, Band 118, Seite 100 ff (1996), sowie in Journal of the Chemical Society, Chemical Commununications, Seite 1127 ff. (1995), beschrieben sind. Dazu zählen insbesondere $RuCl_2(=CHR) (PR'_3)_2$-, bevorzugt $RuCl_2(=CHC_6H_5) (P(C_6H_{11})_3)_2$, ($\eta^6$-p-Cymol)$RuCl_2$ $(p(C_6H_{11})_3)$ und 3 Moläquivalenten Diazoalkan ($(CH_3)_3SiCHN_2$ oder $C_6H_5CHN_2$) "in situ" erzeugt.

Geeignete heterogene Katalysatorsysteme umfassen im allgemeinen eine Übergangsmetallverbindung auf einem inerten Träger, die befähigt ist ohne Cokatalysator, durch Reaktion mit den Olefinedukten einen katalytischen aktiven Alkylidenkomplex zu bilden. Bevorzugt werden $Re_2O_7$ und $CH_3ReO_3$ verwendet.

Geeignete anorganische Träger sind die hierfür üblichen Oxide, insbesondere Silicium- und Aluminiumoxide, Alumosilikate, Zeolithe, Carbide, Nitride, etc. und deren Mischungen. Bevorzugt werden als Träger $Al_2O_3$, $SiO_2$ und deren Mischungen, gegebenenfalls in Kombination mit $B_2O_3$ und $Fe_2O_3$ verwendet.

Die zuvor genannten homogenen und heterogenen Katalysatorsysteme unterscheiden sich stark in ihrer katalytischen Aktivität, so daß die einzelnen Katalysatoren unterschiedliche optimale Reaktionsbedingungen für die Metathese aufweisen. Wie zuvor bereits beschrieben, beeinflußt die katalytische Aktivität bezüglich der Kreuzmetathese (Schritt a)) auch die Produktverteilung der von Cyclopenten abgeleiteten Oligomerengemische III. So sind die auf Ruthenium basierenden homogenen Katalysatorensysteme $RuCl_2(=CHC_6H_5)(P(C_6H_{11})_3)_3$, ($\eta^6$-p-Cymol)$RuCl_2(P(C_6H_{11})_3)/(CH_3)_3SiCHN_2$ und ($\eta^6$-p-Cymol)$RuCl_2(P(C_6H_{11})_3)/C_6H_5CHN_2$ für das Herstellungsverfahren besonders geeignet. Dabei weist der erstgenannte Rutheniumkomplex eine höhere katalytische Aktivität als die beiden letztgenannten auf, was bei ansonsten gleichen Reaktionsbedingungen zu höheren Raum-Zeit-Ausbeuten führt. Gleichzeitig tritt beim ersten Komplex jedoch auch vermehrt die Kreutmetathese auf, wobei zum Teil auch Ethen freigesetzt wird und somit das erhaltene von Cyclopenten abgeleitete Oligomerengemisch III einen etwas geringeren Anteil an Doppelbindungen aufweist, was sich z.B. in einer geringeren Jodzahl ausdrückt. Zudem steht aufgrund der Kreuzmetathese eine größere Anzahl an acyclischen Olefinen ohne endständige Doppelbindungen zur Verfügung, so daß mit dem erstgenannten homogenen Rutheniumkatalysator vermehrt von Cyclopenten abgeleitete Oligomere III erhalten werden, die nur eine oder keine terminale Doppelbindung aufweisen. Die beiden letztgenannten Rutheniumkomplexe weisen eine etwas geringere katalytische Aktivität als der erstgenannte auf, so daß mit ihnen nach dem erfindungsgemäßen Verfahren von Cyclopenten abgeleitete Oligomerengemische I erhalten werden, die einen höheren Doppelbindungsanteil und somit eine höhere Jodzahl sowie einen größeren Anteil an terminalen Doppelbindungen aufweisen.

Auch die heterogenen Katalysatorensysteme weisen die zuvor beschriebenen Aktivitätsunterschiede mit der entsprechenden Beeinflussung der Metatheseprodukte auf. Wird für das Herstellungsverfahren $CH_3ReO_3$ auf $Al_2O_3$ als heterogener Katalysator verwendet, so weist dieser eine höhere katalytische Aktivität als das entsprechende homogene Katalysatorensystem aus $CH_3ReO_3/(C_2H_5)AlCl_2$auf

Vorteilhafterweise wird als heterogener Katalysator $Re_2O_7$ auf $Al_2O_3$ verwendet. Dieser weist eine $RuCl_2(=CHC_6H_5)(P(C_6H_{11})_3)_2$ annähernd vergleichbare Aktivität sowie eine ähnliche Produktverteilung auf und kann nach Regeneration im Luftstrom bei erhöhten Temperaturen, wie z.B. etwa 550° C erneut eingesetzt werden.

Gewünschtenfalls können somit je nach verwendetem Katalysator von Cyclopenten abgeleitete Oligomerengemische III mit wechselnden Doppelbindungsanteilen und wechselnden Anteilen an terminalen Doppelbindungen erhalten werden.

Nach einer speziellen Ausführungsform des Herstellungsverfahrens wird als Metathesekatalysator ein homogener Katalysator auf Rutheniumbasis, ausgewählt unter $RuCl_2(=CHC_6H_5)(P(C_6H_{11})_3)_2$, ($\eta^6$-p-Cymol)$RuCl_2(P(C_6H_{11})3)/(CH_3)_3SiCHN_2$ und ($\eta^6$-p-Cymol)$RuCl_2(P(C_6H_{11})_3)/C_6H_5CHN_2$, verwendet, der dem Reaktionsgemisch als Lösung in einem organischen Lösungsmittel zugegeben wird. Geeignete Lösungsmittel sind z.B. aromatische Kohlenwasserstoffe, wie Toluol und Xylol sowie halogenierte Alkane, wie $CH_2Cl_2$ $CHCl_3$, etc.

Die Reaktionstemperatur liegt bei reaktiven Katalysatorsystemen bei -20 bis 200°C, bevorzugt 0 bis 100° C, insbesondere 20 bis 80° C.

Die Reaktion kann bei einem erhöhten Druck von bis zu 5 bar, bevorzugt bis zu 2 bar, oder insbesondere bevorzugt bei Umgebungsdruck durchgeführt werden.

Nach einer weiteren speziellen Ausführungsform des Herstellungsverfahrens wird als Metathesekatalysator ein heterogener Katalysator auf Rhenium-Basis, ausgewählt unter $CH_3ReO_3/Al_2O_3$ und bevorzugt $Re_2O_7/Al_2O_3$ verwendet, der dem Reaktionsgemisch ohne Lösungsmittelzusatz zugegeben wird.

Die Reaktionstemperatur liegt bei diesen, im Verglech zu den vorgenannten homogenen Katalysatorsystemen etwas weniger aktiven Katalysatoren bei etwa 20 bis 120° C, insbesondere 40 bis 80° C.

Die Reaktion wird vorzugsweise bei einem erhöhten Druck von 2 bis 20 bar, bevorzugt 3 bis 15 bar, insbesondere 4 bis 12 bar durchgeführt.

Die verfahrenstechnische Ausführung des Herstellungsverfahrens kann sowohl kontinuierlich als auch diskontinuierlich erfolgen. Geeignete Reaktionsapparaturen sind dem Fachmann bekannt und werden z.B. in Ullmanns Enzyklopädie der technischen Chemie, Band 1, Seite 743 ff. (1951), beschrieben. Dazu zählen für das diskontinuierliche Verfahren z.B. Rührkessel und für das kontinuierliche Verfahren z.B. Rohrreaktoren.

Nach einer geeigneten diskontinuierlichen Variante des Herstellungsverfahrens kann z.B der $C_5$-Schnitt an einem der zuvor als bevorzugt beschriebenen, homogenen Rutheniumkatalysatoren, welcher gewünschtenfalls im Reaktorbehälter "in situ" erzeigt wird, in einer Metathesereaktion zu den Cyclopenten abgeleiteten Oligomerengemischen III umgesetzt werden.

Nach einer weiteren geeigneten kontinuierlichen Variante des Herstellungsverfahrens kann z.B. der $C_5$-Schnitt an einem der zuvor als bevorzugt beschriebenen heterogenen Rheniumkatalysatoren in einem Rohrreaktor umgesetzt werden.

Nach beiden möglichen Verfahrensvarianten werden in Abhängigkeit vom verwendeten Katalysator und den

übrigen Reaktionsparametern, vor allem der Reaktionstemperatur, Raum-Zeit-Ausbeuten von mindestens 10g $l^{-1}$ $h^{-1}$, bevorzugt mindestens 15g $l^{-1}$ $h^{-1}$, erzielt. Je nach Aktivität des Katalysators können jedoch auch wesentlich höhere Raum-Zeit-Ausbeuten bis etwa 500 g $l^{-1}$ $h^{-1}$ erzielt werden.

Die Auftrennung des Reaktionsgemisches erfolgt nach üblichen Verfahren. Dazu zählt z.B. die fraktionierte Destillation, gegebenenfalls unter vermindertem Druck, oder die Trennung bei erhöhten Temperaturen und Normalsdruck in einem Fallfilmverdampfer. Dabei können leichtsiedende Fraktionen, die noch nicht umgesetzte Olefine enthalten, gewünschtenfalls in die Reaktionsapparatur zurückgeführt werden. Vorteilhafterweise wird bei dem Herstellungsverfahren eine weitergehende Umsetzung der im $C_5$-Schnitt enthaltenen Olefine zu Oligomeren III erzielt, so daß die abgetrennten Leichtsieder ein $C_5$-Kohlenwasserstoffgemisch mit überweigend gesättigten cyclischen und acyclischen Verbindungen umfassen.

Wie zuvor beschrieben, kann die Anzahl und die Lage der Doppelbindungen in den Oligomeren III durch die Reaktionsbedingungen, insbesondere den jeweils verwendeten Katalysator beeinflußt werden. Nach dem beschriebenen Verfahren werden Cyclopenten-Oligomere III erhalten, wobei die Jodzahl mindestens 250 g $I_2$/100 g Oligomere III, bevorzugt mindestens 300 g $I_2$/100 g Oligomere I beträgt.

Das mittlere Molekulargewicht dieser von cyclischen Monoolefinen, insbesondere Cyclopenten abgeleiteten Oligomere III beträgt mindestens 274 g/mol, was einem mittleren Umsatz von drei Cyclopenten-Einheiten pro Oligomer III entspricht, wobei in diesem Fall ein Kettenabbruch durch ein acyclisches Penten (und nicht durch ein Kreuzmetatheseprodukt) angenommen wird.

Zur Herstellung der erfindungsgemäß zu verwendenden Reaktiverdünner werden die vorstehend im Detail beschriebenen Oligomere III in üblicher und bekannter Weise hydroformuliert. Im allgemeinen werden hierbei die Oligomeren III in Gegenwart von geeignete Übergangsmetalle enthaltenden Katalysatoren mit Wasserstoff und Kohlenmonoxid unter Normaldruck oder unter erhöhtem Druck bei Temperaturen von 50 bis 150°C zu aldehydgruppenhaltigen Produkten III umgesetzt.

Ein Beispiel für ein geeignetes Übergangsmetall ist Rhodium.

Die so erhaltenen Produkte III werden isoliert und in üblicher und bekannter Weise zu den erfindungsgemäß zu verwendenden Reaktiverdünnem reduziert. Hierfür kommen alle Reduktionsmittel in Betracht, mit denen Aldehydgruppen zu Hydroxylgruppen reduziert werden können. Beispiele geeigneter Reduktionsmittel sind Borhydride wie Natriumtetrahydroboranat oder Wasserstoff in Gegenwart von Hydrierungskatalysatoren.

Beispiele geeigneter Hydroformylierungs- und Reduktionsverfahren werden in der europäischen Patentschrift EP-A-0 502 839 beschrieben.

Die erfindungsgemäß besonders bevorzugten Reaktiverdünner können in üblicher und bekannter Weise teilweise oder vollständig hydriert werden. Hierfür kommen u.a. die vorstehend genannten Reduktionsmittel in Betracht.

Die erfindungsgemäß besonders bevorzugten Reaktiverdünner weisen eine Hydroxylzahl (OHZ) von 200 bis 650, insbesondere 250 bis 450, auf Ihr mit Hilfe der Gelpermeationschromatographie mit Polystyrol als internem Standard ermitteltes zahlenmittleres Molekulargewicht $M_n$ liegt im Bereich von 400 bis 1.000, insbesondere 400 bis 600. Ihr mit Hilfe der Gelpermeationschromatographie und Polystyrol als internem Standard ermitteltes massenmittleres Molekulargewicht $M_w$ liegt im Bereich von 600 bis 2.000, insbesondere 600 bis 1.100. Die Uneinheitlichkeit $M_w/M_n$ liegt bei 1,4 bis 3, insbesondere 1,7 bis 1,9.

Ein besonders hervorragender erfindungsgemäß zu verwendender Reaktiverdünner weist ein OHZ von 350, ein $M_n$ von 561 und ein $M_w$ von 1.068 auf

Ein gewisser Anteil der erfindungsgemäß zu verwendenden Reaktiverdünner in einem flüssigen Stoffgemisch (A) kann nach der Copolymerisation mit geeigneten olefinisch ungesättigten Verbindungen modifiziert werden, so daß das flüssige Stoffgemische (A) resultieren, die sowohl thermisch als auch durch aktinische Strahlung härtbar sind. Beispiele geeigneter Verbindungen für diese Modifizierung sind die vorstehend beschriebenen höherfunktionellen Monomeren (a).

Die radikalische Copolymerisation der Mischung (A1) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter Copolymerisationsverfahren werden in den Patentschriften DE-A-197 09 465, DE-C-197 09 476, DE-A-28 48 906, DE-A-195 24 182, EP-A-0 554 783, WO 95/27742 oder WO 82/02387 beschrieben.

Beispiele geeigneter Reaktoren sind Rührkessel, Rührkesselkaskaden, Schlaufenreaktoren oder Taylorreaktoren.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität ν des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \; \nu^{-1} (d / r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Die Copolymerisation wird durch Initiatoren initiiert. Beispiele geeigneter Initiatoren sind freie Radikale bildende thermolabile Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether; insbesondere tert.-Butylperoxyethylhexanoat, Benzoylperoxid, Di-tert.-Amylperoxid, Azobisisobutyronitril und tert.-Butylperbenzoat. Die Initiatoren werden bevorzugt in einer Menge von 1 bis 25 Gew.-%, besonders bevorzugt von 2 bis 10 Gew.-%, bezogen auf das Gesamtgewicht der Monomeren (a) und Initiator, eingesetzt.

Die Copolymerisation wird zweckmäßigerweise bei einer Temperatur von 80 bis 200 °C, vorzugsweise 110 bis 180 °C, durchgeführt.

Vorzugsweise werden bei der Copolymerisation der Reaktivverdünner sowie gegebenenfalls mindestens ein Teil der Mischung (A1) im Reaktionsgefäß vorgelegt, wonach man die Mischung (A1) bzw. den Rest der Mischung (A1) sowie eine Lösung mindestens eines Initiators über getrennte Zuläufe Im Verlauf der Copolymerisation zudosiert.

Oder aber es wird mindestens ein ausgewähltes Monomer (a) der Mischung (A1) im Reaktionsgefäß vorgelegt, und es werden übrigen Monomere (a) der Mischung (A1) im Verlauf der Copolymerisation zudosiert.

Die beiden vorstehend genannten Varianten können auch zweistufig durchgeführt werden, d. h., die in der Vorlage befindlichen Monomeren (a) werden partiell oder vollständig auspolymerisiert, wonach die restlichen Monomeren (a) der Mischung (A1) zudosiert und auspolymerisiert werden.

Die Menge und Zugabegeschwindigkeit des Initiators wird vorzugsweise so gewählt, daß ein Copolymerisat, insbesondere ein Polyacrylatharz, mit dem gewünschten zahlenmittleren Molekulargewicht Mn erhalten wird. Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren (a) begonnen und etwa eine halbe Stunde bis zwei Stunden, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren (a) bevorzugt bei einem Polymerisationsfestkörper von mindestens 70 Gew.-%, bezogen auf die Monomeren (a), polymerisiert.

Der zweite wesentliche Bestandteil des erfindungsgemäßen Beschichtungsstoffs ist das hydroxylgruppenhaltige Polyadditionsharz (Polyaddukt) (B). Es ist in dem erfindungsgemäße Beschichtungsstoff in einer Menge von 5 bis 70, vorzugsweise 10 bis 65, bevorzugt 12 bis 60, besonders bevorzugt 15 bis 55 und insbesondere 20 bis 50 Gew.%, jeweils bezogen auf den Feststoffgehalt des Beschichtungsstoffs, enthalten. Es weist ein zahlenmittleres Molekulargewicht Mn von 800 bis 3,500, vorzugsweise 900 bis 3.000, bevorzugt 950 bis 2.800, besonders bevorzugt 1.000 bis 2.600, ganz besonders bevorzugt 1.100 bis 2.400 und insbesondere 1.200 bis 2,200 (bestimmt mit Hilfe der Gelpermeationschromatographie und Polystyrol als internem Standard) auf. Weitere Vorteile ergeben sich, wenn die Uneinheitlichkeit des Molekulargewichts Mw/Mn unter 10, vorzugsweise unter 7, bevorzugt unter 5, besonders bevorzugt unter 4, ganz besonders bevorzugte unter 3 und insbesondere unter 2 liegt. Nicht zuletzt ist es von besonderem Vorteil, wenn die Säurezahl der Polyaddukte (B) unterhalb 10, vorzugsweise 9, besonders bevorzugt 8, ganz besonders bevorzugt 7 und insbesondere 6 mg KOH/g liegt

Im Grunde sind sämtliche oligomeren Polyaddukte geeignet, wenn sie die vorstehend beschriebenen Spezifikationen aufweisen. Zu den Begriffen "Polyadditionsharze" und "Polyaddukte" wird ergänzend auf Römpp Lexikon Lacke und Druckfarben. Georg Thieme Verlag, Stuttgart, New York, 1998, Seite 457, »polyaddition « und »Polyadditionsharze (Polyaddukte)«, sowie Seiten 463 und 464, »Polykondensate«, »Polykondensation « und »Polykondensationsharze« verwiesen.

Beispiele gut geeigneter Polyaddukte (B) sind verzweigte Oligoether, Oligoester, Oligocarbonate, Oligourethane, Oligoharnstoffe, Oligoamide, Oligoimide oder Cooligomere" die Ether-, Ester-, Carbonat-, Urethan-, Hamstoff-, Amid- und/oder imidgruppen in den Oligomerketten enthalten.

Beispiele sehr, gut geeigneter Polyaddukte (B) sind verzweigte Oligoester, Oligourethane, Oligoester-co-oligoether, Oligoester-co-oligocarbonate, Oligoester-co-oligourethane, Oligoester-co-oligoamide, Oligoester-co-oligohamstoffe oder Oligoester-co-oligoimide, insbesondere Oligoester.

Beispiele ganz besonders gut geeigneter Polyaddukte (B) sind verzweigte Oligoester, insbesondere Oligoester, die durch die Umsetzung mindestens einer verzweigten Polycarbonsäure mit mindestens einem Monoepoxyester und/ oder durch die Umsetzung eines Polyols mit einem Carbonsäureanhydrid und die Umsetzung des resultierenden Zwischenpodukts mit einem Epoxid herstellbar sind.

Beispiele hervorragend geeigneter verzweigter Oligoester (B) sind die vorstehend beschriebenen hyperverzweigten Reaktivverdünner und die in der internationalen Patentanmeldung WO 96/20968 beschriebenen verzweigten Umsetzungsprodukte von verzweigten Polycarbonsäuren mit mindestens einem Monoepoxyester.

Die Herstellung der Polyaddukte (B) weist keine Besonderheiten auf, sondern erfolgt nach den üblichen und bekannten Methoden der organischen Chemie und der Oligomerenchemie. Ergänzend wird auch hier auf Römpp Lexikon Lacke und Druckfarben, Georg Thieme Verlag, Stuttgart, New York, 1998, Seite 457, »Polyaddition « und »Polyadditionsharze (Polyaddukte)«, sowie Seiten 463 und 464, »Polykondensate«, »Polykondensation « und »Polykondensationsharze« verwiesen.

Der dritte wesentliche Bestandteile des erfindungsgemäßen Beschichtungsstoffs ist mindestens ein Vernetzungsmittel (C).

Das Vernetzungsmittel (C) ist in dem erfindungsgemäßen Beschichtungsstoffin einer Menge von, jeweils bezogenen auf den Feststoffgehalt des Beschichtungsstoffs, von 5 bis 70, vorzugsweise 10 bis 65, bevorzugt 12 bis 60, besonders bevorzugt 15 bis 55 und insbesondere 20 bis 50 Gew.-% enthalten.

Handelt es sich bei dem Beschichtungsstoff um ein Zwei- oder Mehrkomponentensystem, werden Polyisocyanate und/oder Polyepoxide, insbesondere aber Polyisocyanate als Vernetzungsmittel (C) verwendet.

Beispiele geeigneter Polyisocyanate (C) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5.000 und insbesondere 100 bis 2.000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate (C) in üblicher und bekannter Weise hydrophil oder hydrophob modifiziert sein.

Beispiele für geeignete Polyisocyanate (C) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Polyisocyanate (C) sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan

und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis (isocyanatomethyl)cyclohexan (BIC), Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Beispiele für geeignete Polyepoxide (C) sind alle bekannten aliphatischen und/oder cycloaliphatischen und/ oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel (C) verwendet, welche bei höheren Temperaturen mit den funktionellen Gruppen der Bindemittel reagieren, um ein dreidimensionales Netzwerk aufzubauen. Selbstverständlich können solche Vernetzungsmittel (C) in untergeordneten Mengen in den Mehrkomponentensystemen mit verwendet werden. Im Rahmen der vorliegenden Erfindung bedeutet "untergeordnete Menge" einen Anteil, welcher die hauptsächliche Vernetzungsreaktion nicht stört oder gar ganz verhindert.

Beispiele geeigneter Vernetzungsmittel (C) dieser Art sind blockierte Polyisocyanate. Beispiele geeigneter Polyisocyanate zur Herstellung der blockierten Polyisocyanate sind die vorstehend beschriebenen.

Beispiele für geeignete Blockierungsmittel sind die aus der US-Patentschrift US-A-4,444,954 bekannten Blockierungsmittel wie

i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;

ii) Lactame, wie ε-Caprolactam, δ-Valerolactam, γ-Butyrolactam oder β-Propiolactam;

iii) aktive methylenische Verbindungen, wie Diethylmalonat, Dimethylmalonat, Acetessigsäureethyl- oder -methylester oder Acetylaceton;

iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonopropylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-Z-propanol, 1,4-Cyclohexyldimethanol oder Acetocyanhydrin;

v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;

vi) Säureamide wie Acetoanilid, Acetoanisidinamid, Acrylamid, Methacrylamid, Essigsäureamid, Stearinsäureamid oder Benzamid;

vii) Imide wie Succinimid, Phthalimid oder Maleimid;

viii) Amine wie Diphenylamin, Phenylnaphthylamin, Xylidin, N-Phenylxylidin, Carbazol, Anilin, Naphthylamin, Butylamin, Dibutylamin oder Butylphenylamin;

ix) Imidazole wie Imidazol oder 2-Ethylimidazol;

x) Harnstoffe wie Harnstoff, Thioharnstoff, Ethylenharnstoff, Ethylenthioharnstoff oder 1,3-Diphenylhamstoff;

xi) Carbamate wie N-Phenylcarbamidsäurephenylester oder 2-Oxazolidon;

xii) Imine wie Ethylenimin;

xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiv) Salze der schwefeligen Säure wie Natriumbisulfit oder Kaliumbisulfit;

xv) Hydroxamsäureester wie Benzylmethacrylohydroxamat (BMH) oder Allylmethacrylohydroxamat; oder

xvi) substituierte Pyrazole, Imidazole oder Triazole; sowie

xvii) Gemische dieser Blockierungsmittel, insbesondere Dimethylpyrazol und Triazole, Malonester und Acetessigsäureester oder Dimethylpyrazol und Succinimid.

Als Vernetzungsmittel (C) können auch Tris(alkoxycarbonylamino)triazine (TACT) der allgemeinen Formel

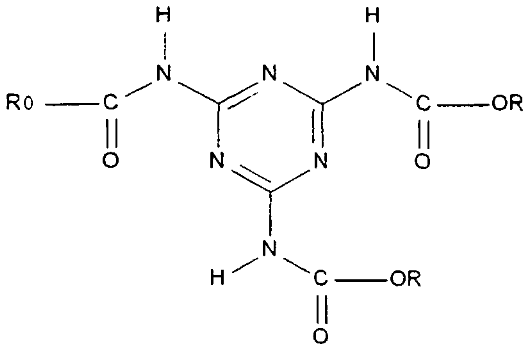

eingesetzt werden.

Beispiele geeigneter Tris(alkoxycarbonylamino)triazine (C) werden in den Patentschriften US-A-4,939,213, US-A-5,084,541 oder EP-A-0 624 577 beschrieben. Insbesondere werden die Tris(methoxy-, Tris(butoxy- und/oder Tris (2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Loslichkeit in Polymerschmelzen und neigen auch weniger zum Auskristallisieren.

Insbesondere sind Aminoplastharze, beispielsweise Melaminharze, Guanaminharze oder Harnstoffharze, als Vernetzungsmittel (C) verwendbar. Hierbei kann jedes für transparente Decklacke oder Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents" second completely revised edition, Edit. D. Stoye und W. Freitag, Wiley-VCH Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel (C) sind beta-Hydroxyalkylamide wie N,N,N,N-Tetrakis(2-hydroxyethyl)adipamid oder N,N,N',N'-Tetrakis(2-hydroxypropyl)-adipamid.

Weitere Beispiele geeigneter Vernetzungsmittel (C) sind Siloxane, insbesondere Siloxane mit mindestens einer Trialkoxy- oder Dialkoxysilangruppe.

Weitere Beispiele geeigneter Vernetzungsmittel (C) sind Polyanhydride, insbesondere Polysuccinsäureanhydrid.

Weitere Beispiele geeigneter Vernetzungsmittel (C) sind Verbindungen mit im Mittel mindestens zwei zur Umesterung befähigten Gruppen, beispielsweise Umsetzungsprodukte von Malonsäurediestern und Polyisocyanaten oder Umsetzungsprodukte von Monoisocyanaten mit Estern und Teilestern der Malonsäure mit mehrwertigen Alkoholen, wie sie in der europäischen Patentschrift EP-A-0 596 460 beschrieben werden.

Der erfindungsgemäße Beschichtungsstoffkann zur Herstellung dekorativer und/oder schützender Beschichtungen, insbesondere Lackierungen wie transparente Klarlackierungen, Grundierungen, insbesondere Steinschlagschutzgrundierungen und Füller, oder farb- und/oder effektgebende Lackierungen, insbesondere Decklackierungen und Basislackierungen, verwendet werden. Dabei können die Lackierungen ein oder mehrschichtig sein.

Zu diesen Verwendungszwecken werden dem erfindungsgemäßen Beschichtungsstoff im allgemeinen lackübliche Additive (D) in wirksamen Mengen zugesetzt. Art und Menge der Additive (D) richten sich vor allem nach dem Verwendungszweck des erfindungsgemäßen Beschichtungsstoffs. Vorzugsweise sind diese Additive (D) unter den Verarbeitungs- und Applikationsbedingungen des erfindungsgemäßen Beschichtungsstoffs nicht flüchtig.

Wird der erfindungsgemäße Beschichtungsstoffe als Füller, Decklack oder Basislack verwendet, enthält er farb- und/oder effektgebende Pigmente (D) in üblichen und bekannten Mengen. Die Pigmente (D) können aus anorganischen oder organischen Verbindungen bestehen und können effekt- und/oder farbgebend sein. Der erfindungsgemäße Beschichtungsstoff gewährleistet daher aufgrund dieser Vielzahl geeigneter Pigmente (D) eine universelle Einsatzbreite der Beschichtungsstoffe und ermöglicht die Realisierung einer Vielzahl von Farbtönen und optischer Effekte.

Als Effektpigmente (D) können Metallplättchenpigmente wie handelsübliche Aluminiumbronzen, gemäß DE-A-36 36 183 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Beispiele für geeignete anorganische farbgebende Pigmente (D) sind Titandioxid, Eisenoxide, Sicotransgelb und Ruß. Beispiele für geeignete organische farbgebende Pigmente sind Indanthrenblau, Cromophthalrot, Irgazinorange und Heliogengrün. Ergänzend wird auf Römpp Lexikon Lacke und Druckfarben, Georg Thieme Verlag, 1998, Seite 176, »Effektpigmente«, sowie Seiten 451 bis 453, »Pigmente« bis »Pigmentvolumenkonzentration«, verwiesen.

Desweiteren kann der erfindungsgemäße Beschichtungsstoff, insbeondere als Füller, organische und anorganische Füllstoffe in üblichen und bekannten, wirksamen Mengen enthalten. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasem oder Holzmehl. Ergänzend wird auf Rompp Lexikon Lacke und Druckfarben, Georg Thieme Verlag, 1998, Seiten 250 ff., »Füllstoffe«, verwiesen.

Diese Additive (D) können auch über Pigmentpasten in die Beschichtungsstoffe eingearbeitet werden, wobei als Reibharze u.a. die vorstehend beschriebenen Copolymerisate in Betracht kommen.

Diese Additive entfallen, wenn die erfindungsgemäßen Beschichtungsstoffe als Klarlacke verwendet werden.

Beispiele geeigneter Additive, welche sowohl in den erfindungsgemäßen Klarlacken, Füllern, Basislacken und Decklacken vorhanden sein können, sind

- übliche und bekannte oligomere und polymere Bindemittel wie thermisch härtbare hydroxylgruppenhaltige oder mit aktinischer Strahlung härtbare lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe oder mit aktinischer Strahlung härtbare (meth)acrylfunktionelle (Meth)Acrylatcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate;

- übliche und bekannte thermisch und/oder mit aktinischer Strahlung härtbare Reaktiverdünner wie die erfindungsgemäß zu verwendenden Diethyloctandiole als solche, di- oder höherfunktionelle (Meth)Acrylate oder (Meth)Acrylatgruppen enthaltende Polyisocyanate;

- niedrig und hochsiedende organische Lösemittel ("lange Lösemittel);

- UV-Absorber;

- Lichtschutzmittel wie HALS-Verbindungen, Benztriazole oder Oxalanilide;

- Radikalfänger;

- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;

- Katalysatoren für die Vernetzung wie Dibutylzinndilaurat, Lithiumdecanoat oder Zinkoctoat;

- Entlüftungsmittel, wie Diazadicycloundecan;

- Photoinitiatoren wie solche vom Norrish II-Typ, deren Wirkungsmechanismus auf einer intramolekularen Variante der Wasserstoff=Abstraktionsreaktionen beruht, wie sie in vielfältiger Weise bei photochemischen Reaktionen auftreten (beispielhaft sei hier aufRömpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide;

- Slipadditive;

- Polymerisationsinhibitoren wie Phosphite;

- Entschäumer;

- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen;

- Netzmittel wie Siloxane, fluorhaltige Verbindungen, Carbonsäurehalbester, Phosphorsäureester, Polyacrylsäuren und deren Copolymere oder Polyurethane;

- Haftvermittler wie Tricydodecandimethanol ;

- Verlaufmittel;

- filmbildende Hilfsmittel wie Cellulose-Derivate;

- transparente Füllstoffe auf der Basis von Siliziumdioxid, Aluminiumoxid oder Zirkoniumoxid; ergänzend wird noch auf das Römpp Lexikon Lacke und Druckfarben, Georg Thieme Verlag, Stuttgart, 1998, Seiten 250 bis 252, verwiesen;

- Sag control agents wie Harnstoffe, modifizierte Harnstoffe und/oder Kieselsäuren, wie sie beispielsweise in den Literaturstellen EP-A-192 304, DE-A-23 59 923, DE-A-18 05 693, WO 94/22968, DE-C-27 51 761, WO 97/12945 oder "farbe + lack", 11/1992, Seiten 829 ff., beschrieben werden;

- Rheologiesteuernder Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly (meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

- Flammschutzmittel und/oder

- Mattierungsmittel wie Magnesiumstearat.

Weitere Beispiele geeigneter Lackadditive (G) werden in dem Lehrbuch »Lackadditive« von Johan Bieleman, Wiley-VCH, Weinheim, New York, 1998, beschrieben.

Diese Additive (D) werden den erfindungsgemäßen Beschichtungsstoffen in üblichen und bekannten, wirksame Mengen zugesetzt, welche je nach Additiv (D) bei 0,001 1 bis 500 Gewichtsteilen pro 100 Gewichtsteile der erfindungswesentlichen Bestandteile (A), (B) und (C) liegen.

Die Herstellung des erfindungsgemäßen Beschichtungsstoffs weist keine Besonderheiten auf, sondern erfolgt in üblicher und bekannter Weise durch Vermischen der Bestandteile (A), (B) und (C) sowie gegebenenfalls (D) in geeigneten Mischaggregaten wie Rührkessel, Dissolver oder Extruder nach den für die Herstellung der jeweiligen Beschichtungsstoffe geeigneten Verfahren.

Der erfindungsgemäße Beschichtungsstoff dient der Herstellung der erfindungsgemäßen Lackierungen, insbesondere Mehrschichtlackierungen ML, auf grundierten oder ungrundierten Substraten.

Als Substrate kommen alle zu lackierenden Oberflächen, die durch eine Härtung der hierauf befindlichen

Lackierungen unter Anwendung von Hitze und/oder aktinischer Strahlung nicht geschädigt werden, in Betracht, das sind z. B. die erfindungsgemäßen Formteile, Folien und Fasern, Metalle, Kunststoffe, Holz, Keramik, Stein, Textil, Faserverbunde, Leder, Glas, Glasfasern, Glas- und Steinwolle, mineral- und harzgehundene Baustoffe, wie Gips- und Zementplatten oder Dachziegel, sowie Verbunde dieser Materialien. Demnach ist die erfindungsgemäße Lackierung auch für Anwendungen außerhalb der Kfz-Lackierung, insbesondere Automobillackierung geeignet. Hierbei kommt sie insbesondere für die Lackierung von Möbeln und die industrielle Lackierung, inklusive Coil Coating, Container Coating und die Imprägnierung oder Beschichtung elektrotechnischer Bauteile, in Betracht. Im Rahmen der industriellen Lackierungen eignet sie sich für die Lackierung praktisch aller Teile für den privaten oder industriellen Gebrauch wie Radiatoren, Haushaltsgerate, Kleinteile aus Metall wie Schrauben und Muttern, Radkappen, Felgen, Emballagen oder elektrotechnische Bauteile wie Motorwicklungen oder Transformatorwicklungen.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit der erfindungsgemäßen Mehrschichtlackierung können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die erfindungsgemäßen Mehrschichtlackierungen ML können in unterschiedlicher Weise hergestellt werden.

In einer ersten bevorzugten Variante umfaßt das erfindungsgemäße Verfahren die folgenden Verfahrensschritte:

(I) Herstellen einer Füllerlackschicht durch Applikation eines Füllers auf das Substrat,

(II) Härtung der Füllerlackschicht, wodurch die Füllerschicht resultiert,

(III) Herstellen einer Unidecklackschicht durch Applikation eines Unidecklacks auf die Füllerschicht und

(IV) Härtung der Unidecklackschicht, wodurch die Unidecklackierung resultiert.

Eine weitere bevorzugte Variante des erfindungsgemäßen Verfahrens umfaßt die Verfahrensschritte:

(I) Herstellen einer Basislackschicht durch Applikation eines Basislacks auf das Substrat,

(II) Trocknen der Basislackschicht,

(III) Herstellen einer Klarlackschicht durch Applikation eines Klarlacks auf die Basislackschicht und

(IV) gemeinsame Härtung der Basislackschicht und der Klarlackschicht, wodurch die Basislackierung und die Klarlackierung resultieren (Naß-in-naßVerfahren).

Eine dritte bevorzugte Variante des erfindungsgemäßen Verfahrens umfaßt die Verfahrensschritte:

(I) Herstellen einer Füllerlack.schicht durch Applikation eines Füllers auf das Substrat,

(II) Härtung der Füllerlackschicht, wodurch die Füllerschicht resultiert,

(III) Herstellen einer Basislackschicht durch Applikation eines Basislacks auf die Füllerschicht,

(IV) Trocknen der Basislackschicht,

(V) Herstellen einer Klarlackschicht durch Applikation eines Klarlacks auf die Basislackschicht und

(VI) gemeinsame Härtung der Basislackschicht und der Klarlackschicht, wodurch die Basislackierung und die Klarlackierung resultieren (Naß-in-naßVerfahren).

Welche bevorzugte Variante gewählt wird, richtet sich nach dem Verwendungszweck der erfindungsgemäßen Mehrschichtlackierungen ML. So wird insbesondere die dritte Variante bei der Automobilserienlackierung besonders bevorzugt angewandt.

Demzufolge können die erfindungsgemäßen Mehrschichtlackierungen ML einen unterschiedlichen Aufbau aufweisen.

In einer ersten bevorzugten Variante der erfindungsgemäßen Mehrschichtlackierung ML liegen

(1) eine mechanische Energie absorbierende Füllerschicht und

(2) eine farb- und/oder effektgebende Decklackierung

in der angegebenen Reihenfolge übereinander.

In einer zweiten bevorzugten Variante der erfindungsgemäßen Mehrschichtlackierung ML liegen

(1) eine mechanische Energie absorbierende Füllerschicht,

(2) eine farb- und/oder effektgebende Basislackierung und

(3) eine Klarlackierung

in der angegebenen Reihenfolge übereinander.

In einer dritten bevorzugten Variante der erfindungsgemäßen Mehrschichtlackierung ML liegen

(1) eine farb- und/oder effektgebende Basislackierung und

(2) eine Klarlackierung

in der angegebenen Reihenfolge übereinander. Die dritte bevorzugte Variante wird insbesondere bei der Kunststofflakkierung angewandt.

Die Applikation des erfindungsgemäßen Beschichtungsstoffs kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substraten als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Die Applikationen kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Sofern der Beschichtungsstoff Bestandteile enthält, die mit aktinischer Strahlung vernetzbar sind, wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Beschichtungsstoffs und des Overspray vermieden.

Im allgmeinen werden die Füllerlackschicht, Decklackschicht, Basislackschicht und Klarlackschicht in einer Naßschichtdicke appliziert, daß nach ihrer Aushärtung Schichten mit der für ihre Funktionen notwendigen und vorteilhaften Schichtdicken resultieren. Im Falle der Füllerschicht liegt diese Schichtdicke bei 10 bis 150, vorzugsweise 15 bis 120, besonders bevorzugt 20 bis 100 und insbesondere 25 bis 90 µm, im Falle der Decklackierung liegt sie bei 5 bis 90, vorzugsweise 10 bis 80, besonders bevorzugt 15 bis 60 und insbesondere 20 bis 50 µm, im Falle der Basislackierung liegt sie bei 5 bis 50, vorzugsweise 10 bis 40, besonders bevorzugt 12 bis 30 und insbesondere 15 bis 25 µm, und im Falle der Klarlackierungen liegt sie bei 10 bis 100, vorzugsweise 15 bis 80, besonders bevorzugt 20 bis 70 und insbesondere 25 bis 60 µm.

Erfindungsgemäß können die Füllerlackschicht, Decklackschicht, Basislackschicht und Klarlackschicht je nach ihrer stofflichen Zusammensetzung thermisch, mit aktinischer Strahlung oder thermisch und mit aktinischer Strahlung ausgehärtet werden. Werden diese Schichten aus den erfindungsgemäßen Beschichtungsstoffen hergestellt, werden sie thermisch oder thermisch und mit aktinischer Strahlung ausgehärtet. Erfindungsgemäß ist es von Vorteil die Basislackschicht vor der Applikation der Klarlackschicht gar nicht oder nur partiell auszuhärten, um sie anschließend gemeinsam mit der Klarlackschicht auszuhärten (Naß-in-naßVerfahren).

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 80 °C unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 80 bis 100 °C und insbesondere 90 bis 100 ° C während einer Zeit von 1 min bis zu 2 h, besonders bevorzugt 2 min bis zu 1 h und insbesondere 3 min bis 30 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 140 °C nicht zu überschreiten.

Die thermische Härtung kann bei entsprechender stofflicher Zusammensetzung des Beschichtungsstoffs durch die Härtung mit aktinischer Strahlung ergänzt werden, wobei insbesondere UV-Strahlung und/oder Elektronenstrahlen verwendet werden können. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschicht gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten ausgehärtet werden.

Die Anlagen und Bedingungen dieser Härtungsmethoden werden beispielsweise in R. Holmes "UV and E.B. Curing Formulations for Printing Inks«, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt (Dual Cure), können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für jeden Einzelfall besonders gut geeignet ist aufgrund seines allgemeinen Fachwissens gegebenenfalls unter Zuhilfenahme einfacher Vorversuche ermitteln.

Die erfindungsgemäßen Klarlackierungen weisen ein hervorragendes Eigenschaftsprofil, insbesondere einen hohen Glanz, eine hohe Säurebeständigkeit, ein hohe Kratzfestigkeit und einen sehr guten Verlauf auf In ihrer Verwendung als Reparaturlackierung haftet sie ausgezeichnet auf den Originallackierungen, so daß diese vor der Applikation der erfindungsgemäßen Beschichtungsstoffe in vielen Fällen nicht mehr angeschliffen werden müssen. Ein weiterer besonderer Vorteil ist, daß sie bereits bei vergleichsweise niedrigen Temperaturen ein ausgezeichnetes Reflow-Verhalten zeigt.

Die erfindungsgemäßen Mehrschichtlackierungen ML weisen ebenfalls ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen ML die vom Markt geforderte hohe optische Qualität und Zwischenschichthaftung auf und werfen keine Probleme wie mangelnde Schwitzwasserbeständigkeit der Füllerschichten, Rißbildung

(mudcracking) in den Basislackierungen oder Verlaufsstörungen oder Oberflächenstrukturen in den Klarlackierungen auf

Insbesondere weist die erfindungsgemäße Mehrschichtlackierung ML einen hervorragenden Metallic-Effekt:, einen hervorragenden D.O.I. (distinctiveness of the reflected image) und eine hervorragende Oberflächenglätte, auf. Sie ist witterungsstabil, resistent gegenüber Chemikalien und Vogelkot und kratzfest und zeigt ein sehr gutes Reflow-Verhalten.

Ein weiterer wesentlicher Vorteil ist die sehr gute Überlackierbarkeit der erfindungsgemäßen Mehrschichtlackierung ML auch ohne Anschleifen. Dadurch kann sie leicht mit üblichen und bekannten hochkratzfesten Beschichtungsstoffen auf der Basis organisch modifizierter Keramikmaterialien beschichtet werden.

Nicht zuletzt erweist es sich aber als ganz besonderer Vorteil, daß mit Hilfe der vorstehend beschriebenen Verfahren eine Mehrschichtlackierung ML realisiert werden kann, welche ausschließlich auf den erfindungsgemäßen Beschichtungsstoffen basiert.

Demzufolge weisen auch die erfindungsgemäßen Substrate besondere Vorteile wie eine längere Gebrauchsdauer, einen besseren ästhetischen Eindruck beim Betrachter und eine bessere technologische Verwertbarkeit auf, was sie wirtschaftlich besonders attraktiv macht.

## Beispiele

### Herstellbeispiel 1

### Die Herstellung eines Polyadditionsharzes (B)

In einem 4 Liter-Stahlreaktor wurden 134 g Trimethylolpropan und 462 g Hexahydrophthalsäureanhydrid vorgelegt und während 6,5 Stunden auf 120 °C erhitzt. Anschließend wurden 684 g Versatic®-Säureglycidylester hinzugegeben, und die resultierende Reaktionsmischung wurde so lange erhitzt, bis eine Säurezahl von 4,5 erreicht war. Das Polyadditionsharz wurde bei 90°C mit Butylacetat auf einen Festkörper von 84,4 % angelöst. Das durch Gelpermeationschromatographie mit Polystyrol als internem Standard ermittelte zahlenmittlere Molekulargewicht Mn lag bei 1499 Dalton, das massenmittlere Molekulargewicht Mw lag bei 2485 Dalton.

### Herstellbeispiel 2

### Die Herstellung eines erfindungsgemäß zu verwendenden Stoffgemischs (A)

In einem 4 Liter-Stahlreaktor mit zwei Zulaufgefäßen und Rückflußkühler wurden 159 g 2,5-Diethyloctandiol-1,5, 75 g VeoVa® 10 (Versatic®-säure-vinylester), 172,5 g Methylamylketon und 132,5 g Ethoxyethylpropionat vorgelegt und unter Stickstoff unter Rühren auf 145 °C erhitzt. Zu dieser Vorlage dosierte man gleichzeitig beginnend eine Mischung aus 225 g Styrol, 150 g tert.- Butylcyclohexylacrylat, 300 g Butylmethacrylat, 150g Isodecylmethacrylat, 199,5 g Hydroxybutylacrylat und 400,5 g Hydroxypropylmethacrylat gleichmäßig über einen Zeitraum von vier Stunden sowie eine Mischung aus 60 g Di-tert.-butylperoxid und 40 g Methylamylketon gleichmäßig über einen Zeitraum von fünf Stunden bei etwa 145 °C zu. Das resultierende Copolymerisat wurde mit einer Mischung aus 8 Gewichtsteilen Butylacetat, 1 Gewichtsteil Xylol und 1 Gewichtsteil Methylamylketon auf einen Feststoffgehalt von 70 Gew.-% (eine Stunde, 130 °C) eingestellt und wies dann eine Viskosität von 44 dPas auf.

### Beispiel 1

### Die Herstellung eines erfindungsgemäßen Klarlacks und einer erfindungsgemäßen Mehrschichtlackierung ML

### 1.1 Der erfindungsgemäße Klarlack

Der erfindungsgemäße Zweikomponenten-Klarlack wurde aus den folgenden Bestandteilen hergestellt:

<u>Komponente 1:</u>

24,6 g des Polyadditionsharzes (B) des Herstellbeispiels 1,

19,5 g des Stoffgemischs (A) des Herstellbeispiels 2,

6,9 g 2,4-Diethyloctandiol-1,5,

0,07 g einer 10 %igen Lösung von Dibutylzinndilaurat in Butylacetat,

0,07 g Byk® 331 (handelsübliches Verlaufadditiv der Firma Byk Chemie),

0,4 g eines handelsüblichen Additivs, das die Verarbeitungszeit verlängert,

0, 02 g eines handelsüblichen Verlaufadditivs auf Siliconbasis,

0,8 g Tinuvin® 400 (handelsübliches Lichtschutzmittel der Firma Ciba Specialty Chemical, Inc.) und

0,7 g Tinuvin® 292 (handelsübliches Lichtschutzmittel der Firma Ciba Specialty Chemical, Inc.);

Komponente 2:

18,5 g Butylacetat,

22,8 g Desmodur® 2025 (handelsübliches Vernetzungsmittel der Firma Bayer AG auf der Basis von Hexamethylendiisocyanat) und

6,51 g Desmodur® 3390 (handelsübliches Vernetzungsmittel der Firma Bayer AG auf der Basis von Hexamethylendiisocyanat).

Der erfindungsgemäße Zweikomponente-Klarlack wies eine Verarbeitungszeit von zwei Stunden auf. Die Originalviskosität, gemessen mit dem DIN-Auslaufbecher, lag bei 29 s. Der Feststoffgehalt des Klarlacks betrug 74 Gew.-% (eine Stunde, 130 °C).

**1.2 Die erfindungsgemäße Mehrschichtlackierung ML**

Auf mit einem handelsüblichen Elektrotauchlack kathodisch beschichteten Stahltafeln (Elektrotauchlackierung mit einer Schichtdicke von 18 - 22 µm) wurde mit einer Becherpistole zunächst ein handelsüblicher Füller von BASF Coatings AG appliziert und eingebrannt. Es resultierte eine Füllerschicht mit einer Schichtdicke von 35 bis 40 µm. Anschließend wurde auf den Füller in gleicher Weise ein handelsüblicher schwarzer Unibasislack der Firma BASF Coatings AG appliziert und während 10 min bei 80 °C vorgetrocknet. Nach dem Kühlen der Tafeln wurde ein Schicht des erfindungsgemäßen Zweikomponenten-Klarlacks aufgetragen und während 10 min bei 50 °C vorgetrocknet und anschließend während 45 min bei 140 °C zusammen mit dem Basislack vernetzt. Es resultierten eine Basislackschicht einer Stärke von 15 µm und eine Klarlackschicht einer Stärke von 44 µm. Der schwarze Unibasislack wurde gewählt, weil man an den entsprechenden Prüftafeln die Bildung von Kratzer am besten beobachten konnte.

**1.3 Anwendungstechnische Eigenschaften der erfindungsgemäßen Mehrschichtlackierung ML**

**1.3.1 Glanz**

Der Glanz wurde reflektometrisch nach DIN 67530 unter einem Winkel von 20° mit einem Reflektometer der Firma BYK zu 83 bestimmt. Die erfindungsgemäße Mehrschichtlackierung ML entsprach damit in dieser Hinsicht den Anforderungen der Praxis.

**1.3.2 Die Kratzfestigkeit**

Die Prüftafeln wurden nach Applikation der Lacke 7 Tage bei Raumtemperatur gelagert, bevor die Prüfung durchgeführt wurden.

**1.3.2.1 Die Kratzfestigkeit nach dem Bürstentest**

Die Kratzfestigkeit wurde mit Hilfe des in Fig. 2 auf Seite 28 des Artikels von P. Betz und A. Bartelt, Progress

in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Der Prüfkörper war mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0.25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült und die Prüftafel mit Druckluft trockengeblasen. Gemessen wurde der Glanz nach DIN 67530 vor und nach Beschädigung sowie nach Regeneration (Meßrichtung senkrecht zur Kratzrichtung. Die Ergebnisse finden sich in der Tabelle 1.

**Tabelle 1: Die Kratzfestigkeit nach dem Bürstentest**

| Glanz: | (%) |
|---|---|
| Vor Belastung: | 83 |
| Nach Belastung: | 74 |
| Nach zweistündiger Regeneration bei 40°C: | 82 |
| Nach zweistündiger Regeneration bei 60°C: | 82 |

Die erfindungsgemäße Mehrschichtlackierungen ML zeichnete sich durch ein sehr gutes Reflow-Verhalten schon bei 40 °C aus.

### 1.3.2.2 Die Kratzfestigkeit nach dem Sandtest

Zusätzlich wurde die Kratzfestigkeit nach dem Sandtest, wie z. B. in der deutschen Patentanmeldung DE-A-198 09 643 beschrieben, bestimmt. Hierzu wurden die Lackoberflächen mit Sand belastet (20g Quarz-Silbersand 1,5-2,0 mm). Der Sand wurde in einen Becher (Boden plan abgeschnitten) gegeben, der fest auf der Prüftafel befestigt wurde. Es wurden die gleichen Prüftafeln, wie oben im Bürstentest beschrieben, verwendet. Mittels eines Motorantriebes wurde die Tafel mit dem Becher und dem Sand in Schüttelbewegungen versetzt. Die Bewegung des losen Sandes verursachte dabei die Beschädigung der Lackoberfläche (100 Doppelhübe in 20 s). Nach der Sandbelastung wurde die Prüffläche vom Abrieb gereinigt, unter einem kalten Wasserstrahl vorsichtig abgewischt und anschließend mit Druckluft getrocknet. Gemessen wurde der Glanz nach DIN 67530 vor und nach Beschädigung sowie Regeneration. Die Ergebnisse finden sich in der Tabelle 2.

**Tabelle 1: Die Kratzfestigkeit nach dem Sandtest**

| Glanz: | (%) |
|---|---|
| Vor Belastung: | 83 |
| Nach Belastung: | 55 |
| Nach zweistündiger Regeneration bei 40°C: | 72 |
| Nach zweistündiger Regeneration bei 60°C: | 72 |

Auch in diesem Test zeigte sich das sehr gute Reflow-Verhalten schon bei 40°C.

### 1.3.3 Die Haftfestigkeit

Im Gitterschnittest nach DIN 53151 (2 mm) [Note GT0 bis GT5; 0 = bester Wert; 5 = schlechtester Wert] erzielte die erfindungsgemäße Mehrschichtlackierung ML die Note GT0

Die Prüftafeln wurden dem Schwitzwasserkonstantklima (SKK) nach DIN 50017 ausgesetzt. Durch die Belastung traten keine Blasen auf.

Durch die Belastung wurde auch die Haftfestigkeit nicht in Mitleidenschaft bezogen: die erfindungsgemäßen Mehrschichtlackierung ML erzielte im Gitterschnittest nach 240 Stunden SKK und 2 Stunden Regeneration noch immer die Note GT0.

## Patentansprüche

1. Lösemittelhaftiger Beschichtungsstoff, enthaltend

   A) 5 bis 70 Gew.-%, bezogen auf den Feststoffgehalt des Beschichtungsstoffs, mindestens eines Stoffgemischs, herstellbar, indem man

      A1) eine Mischung aus olefinisch ungesättigten Monomeren, enthaltend

         a1) 1 bis 90 Gew.%, bezogen auf die Mischung (A1), mindestens eines cycloaliphatischen Monomeren und
         a2) 0 bis 90 Gew.-%, bezogen auf die Mischung (A1), mindestens eines hydroxylgruppenhaltigen Monomeren,

      wobei sich die Mengen der olefinisch ungesättigten Monomeren zu 100 Gew.-% addieren,
      in mindestens einem hydroxylgruppenhaltigen Reaktivverdünner für thermisch härtbare reaktive Beschichtungsstoffe copolymerisiert, wobei die Reaktivverdünner bei Raumtemperatur flüssig sind;

   B) 5 bis 70 Gew.-%, bezogen auf den Feststoffgehalt des Beschichtungsstoffs, mindestens eines hydroxylgruppenhaltigen Polyadditionsharzes (Polyaddukt) eines zahlenmittleren Molekulargewichts Mn von 800 bis 3.500 sowie
   C) 5 bis 70 Gew.-%, bezogen auf den Feststoffgehalt des Beschichtungsstoffs, mindestens eines Vernetzungsmittels für die thermische Vernetzung;

   wobei sich die Mengen der Bestandteile (A), (B) und (C) zu 100 Gew.-% addieren.

2. Der Beschichtungsstoff nach Anspruch 1, **dadurch gekennzeichnet, daß** man die Mischung (A1) bei einem Polymerisationsfestkörper von mindestens 70 Gew.-%, gezogen auf die eingesetzten Monomeren (a), zum Copolymerisat (A1) copolymerisiert.

3. Der Beschichtungsstoff nach einem der Ansprüche 1 oder 2, **dadurch gekennzeichnet, daß** man als cycloaliphatische Monomere (a1) Cyclohexyl-, Isobornyl-, Dicyclopentadienyl-, Octahydro-4,7-methano-1H-inden-methanol- oder tert.-Butylcyclohexylacrylat, -methacrylat, -ethacrylat und/oder -crotonat oder 1,4-Bis(hydroxymethyl)cyclohexan-, Octahydro-4,7-methano-1H-inden-dimethanol-monoacrylat, -monomethacrylat, -monoethacrylat und/oder -monocrotonat verwendet.

4. Der Beschichtungsstoff nach einem der Ansprüche 1 bis 3, **dadurch gekennzeichnet, daß** als Reaktivverdünner Polyole verwendet werden.

5. Der Beschichtungsstoff nach Anspruch 4, **dadurch gekennzeichnet, daß** als Polyole

   (i) hyperverzweigte Verbindungen mit einer tetrafunktionellen Zentralgruppe, abgeleitet von Ditrimethylolpropan, Diglycerin und/oder Ditrimethylolethan, oder einer tetrafunktionellen Zentralgruppe der allgemeinen Formel I,

$$\mathbf{C\ [-A_q\text{-}X\text{-}]_m\ [-A_r\text{-}X\text{-}]_n\ [-A_s\text{-}X\text{-}]_o\ [-A_t\text{-}X\text{-}]_p} \qquad \text{(I)},$$

   worin die Indices und die Variablen die folgende Bedeutung haben:
   $m+n+o+p=4$; mit
   m = eine ganze Zahl von 1 bis 3 und
   n, o und p = 0 oder eine ganze Zahl von 1 bis 3;
   q, r, s und t = eine ganze Zahl von 1 bis 5, wobei $q \geq r, s, t$, insbesondere $q > r, s, t$;

      X = -O-, -S- oder -NH-;
      A = $-CR_2-$; mit R = -H, -F, -Cl, -Br, -CN, $-NO_2$, $C_1$-$C_3$-Alkyl- oder -Haloalkyl- oder $C_1$-$C_3$-Alkoxyrest oder - für q, r, s und/oder t = mindestens 2 - R = $C_2$-$C_4$-Alkandiyl- und/oder -Oxaalkandiylrest, welcher 2 bis 5 Kohlenstoffatome und/oder ein Sauerstoffatom -O-, welches 3 bis 5 Kohlenstoffatome des Restes -A- überbrückt, aufweist;

(ii) verzweigte Oligoester, die durch die Umsetzung mindestens einer verzweigten Polycarbonsäure mit mindestens einem Monoepoxyester erhältlich sind;
(iii) cyclische und/oder acyclische $C_9$-$C_{16}$-Alkane, die mit mindestens zwei hydroxyl- oder mindestens einer Hydroxyl- und mindestens einer Thiolgruppe funktionalisiert sind;
(iv) Polyole, erhältlich, indem Oligomere der Formel III,

$$R^3R^4C=[=CH-R^2-CH=]_v=CR^5R^6 \qquad \textbf{(III)}$$

worin $R^2$ = -(-$CH_2$-)$_w$-, worin der Index w eine ganze Zahl von 1 bis bedeutet, oder
=

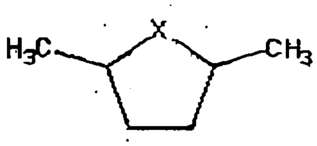

worin X= -$CH_2$- oder ein Sauerstoffatom;

$R^3$, $R^4$, $R^5$ und $R^6$ unabhängig voneinander = Wasserstoffatome oder Alkyl; und

Index v = eine ganze Zahl von 1 bis 15,

hydroformyliert und die hierbei resultierenden aldehydgruppenhaltigen Produkte III zu den Polyolen III reduziert werden, welche gegebenenfalls teilweise oder vollständig hydriert werden;
verwendet werden.

**6.** Beschichtungsstoff nach Anspruch 5, **dadurch gekennzeichnet, daß** als Polyole (i) mindestens eine hyperverzweigte Verbindung, erhältlich durch Umsetzung von 2,2-Bis-hydroxymethyl-butandiol-1,4 mit einem Dicarbonsäureanhydrid und anschließender Umsetzung des resultierenden Zwischenprodukts mit Glycidylestern von tertiären, stark verzweigten, gesättigten Monocarbonsäuren,

- als Polyole (iii) stellungsisomere Dialkyloctandiole, insbesondere stellungsisomere Diethyloctandiole, und
- als Polyole (iv) hydroformylierte und hydrierte Oligomere, erhältlich durch (iv-1) Metathese von acyclischen Monoolefinen und cyclischen Monoolefinen, (iv-2) Hydroformylierung der resultierenden Oligomeren und (iv-3) anschließender Hydrierung, wobei als cyclisches Monoolefin Cyclopenten, und als acyclische Monoolefine Kohlenwasserstoffgemische, die in der Erdölverarbeitung durch Cracken erhalten werden ($C_5$-Schnitt), verwendet werden und wobei die Polyole (iv) eine Hydroxylzahl (OHZ) von 200 bis 650, Insbesondere 250 bis 450, ein zahlenmittleres Molekulargewicht $M_n$ von 400 bis 1.000, insbesondere 400 bis 600 ein massenmittleres Molekulargewicht $M_w$ im Bereich von 600 bis 2.000, insbesondere 600 bis 1.100 und eine Uneinheitlichkeit $M_w/M_n$ von 1,4 bis 3, insbesondere 1,7 bis 1,9, aufweisen;

verwendet werden.

**7.** Der Beschichtungsstoff nach einem der Ansprüche 1 bis 6, **dadurch gekennzeichnet, daß** die Polyaddukte (B) verzweigte Oligoether, Oligoester, Oligocarbonate, Oligourethane, Oligoharnstoffe, Oligoamide, Oligoimide oder Cooligomere sind, die Ether-, Ester-, Karbonat , Urethan-, Hamstoff-, Amid- und/oder Imidgruppen in den Oligomer- und/oder Oligomerketten enthalten.

**8.** Der Beschichtungsstoff nach Anspruch 7, **dadurch gekennzeichnet, daß** die die Oligoaddukte (B) verzweigte oligmere Oligoester, Oligourethane, Oligoester-co-oligoether, Oligoester-co-oligocarbonate, Oligoester-co-oligourethane, Oligoester-co-oligoamide, Oligoester-co-oligoharnstoffe oder Oligoester-co-oligoimide, insbesondere Oligoester, sind.

**9.** Der Beschichtungsstoff nach Anspruch 8, **dadurch gekennzeichnet, daß** der Oligoester, durch die Umsetzung mindestens einer verzweigten Polycarbonsäure mit mindestens einem Monoepoxyester und/oder durch die Umsetzung eines Polyols mit einem Carbonsäureanhydrid und die Umsetzung des resultierenden Zwischenpodükts mit einem Epoxid herstellbar ist.

**10.** Der Beschichtungsstoff nach Anspruch 9, **dadurch gekennzeichnet, daß** das Polyaddukt (B) ein Polyol (i) ist.

**11.** Der Beschichtungsstoff nach einem der Ansprüche 1 bis 10, **dadurch gekennzeichnet, daß** er thermisch oder thermisch und mit aktinischer Strahlung (dual Cure) vernetzbar ist.

**12.** Verwendung des Beschichtungsstoffs gemäß einem der Ansprüche 1. bis 11 in der Automobilerst- und -reparaturlackierung, der industriellen Lackierung, indusive Coil Coating, Container Coating und die Beschichtung elektrotechnischer Bauteile, der Kunststofflackierung und der Möbellackierung.

**13.** Die Verwendung nach Anspruch 12, **dadurch gekennzeichnet, daß** der Beschichtungsstoff für die Herstellung ein- oder mehrschichtiger klarer oder farb- und/oder effektgebender Lackierungen verwendet wird.

**14.** Ein- oder mehrschichtige klare oder farb- und/oder effektgebende Lackierungen, herstellbar unter Verwendung des Beschichtungsstoffs gemäß einem der Ansprüche 1 bis 11.

**15.** Grundierte oder ungrundierte Substrate, insbesondere Kraftfahrzeugkarosserien, industrielle Bauteile und Fertigprodukte, inklusive Coils, Container und elektronische Bauteile, Formteile aus Kunststoff und Möbel, enthaltend mindestens eine ein- oder mehrschichtige klare und/oder farb- und/oder effektgebende Lackierung gemäß Anspruch 14.

## Claims

**1.** Solventborne coating material comprising:

A) from 5 to 70% by weight, based on the solids content of the coating material, of at least one composition preparable by copolymerizing

A1) a mixture of olefinically unsaturated monomers containing

a1) from 1 to 90% by weight, based on the mixture (A1), of at least one cycloaliphatic monomer and
a2) from 0 to 90% by weight, based on the mixture (A1), of at least one hydroxyl-containing monomer,

the amounts of the olefinically unsaturated monomers adding up to 100% by weight,
in at least one hydroxyl-containing reactive diluent for thermally curable reactive coating materials, the reactive diluent being liquid at room temperature;

B) from 5 to 70% by weight, based on the solids content of the coating material, of at least one hydroxyl-containing polyaddition resin (polyadduct) with a number-average molecular weight Mn of from 800 to 3500 and
C) from 5 to 70% by weight, based on the solids content of the coating material, of at least one thermal crosslinking agent;

the amounts of the constituents (A), (B) and (C) adding up to 100% by weight.

**2.** Coating material according to Claim 1, **characterized in that** the mixture (A1) is copolymerized at a polymerization solid of at least 70% by weight, based on the monomers (a) used, to give the copolymer (A1).

**3.** Coating material according to either of Claims 1 or 2, **characterized in that** cyclohexyl, isobornyl, dicyclopentadienyl, octahydro-4,7-methano-1H-indenemethanol or tert-butylcyclohexyl acrylate, methacrylate, ethacrylate and/or crotonate or 1,4-bis(hydroxymethyl)cyclohexane, octahydro-4,7-methano-1H-indenedimethanol monoacrylate, monomethacrylate, monoethacrylate and/or monocrotonate are used as cycloaliphatic monomers (a1).

**4.** Coating material according to any of Claims 1 to 3, **characterized in that** polyols are used as reactive diluents.

**5.** Coating material according to Claim 4, **characterized in that** polyols used comprise

(i) hyperbranched compounds containing a tetrafunctional central group derived from ditrimethylolpropane, diglycerol and/or ditrimethylolethane or a tetrafunctional central group of the general formula I

$$\mathbf{C[-A_q-X-]_m\ [-A_r-X-]_n\ [-A_s-X-]_o\ [-A_t-X-]_p} \qquad (I),$$

in which the indices and variables have the following definitions:
$m + n + o + p = 4$; where
m is an integer from 1 to 3, and
n, o and p are 0 or an integer from 1 to 3;
q, r, s and t are an integer from 1 to 5, where $q \geq r, s, t$, especially $q > r, s, t$;
X is -O-, -S- or -NH-;
A is $-CR_2-$; where
R is -H, -F, -Cl, -Br, -CN, $-NO_2$, $C_1$-$C_3$ alkyl or haloalkyl or $C_1$-$C_3$ alkoxy radical or, if q, r, s and/or t are at least 2, R is a $C_2$-$C_4$ alkanediyl and/or oxaalkanediyl radical having 2 to 5 carbon atoms and/or an oxygen atom -O- which bridges from 3 to 5 carbon atoms of the radical -A-;
(ii) branched oligoesters obtainable by reacting at least one branched polycarboxylic acid with at least one monoepoxy ester;
(iii) cyclic and/or acyclic $C_9$-$C_{16}$ alkanes functionalized with at least two hydroxyl or at least one hydroxyl and at least one thiol group;
(iv) polyols obtainable by hydroformylating oligomers of the formula III

$$\mathbf{R^3R^4C{=}\ [{=}CH{-}R^2{-}CH{=}]_v{=}CR^5R^6} \qquad (III),$$

in which $R^2$ is $-(-CH_2-)_w-$,
in which the index w is an integer from 1 to 6, or is

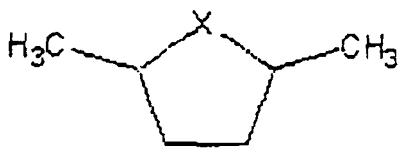

in which X is $-CH_2-$ or an oxygen atom;
$R^3$, $R^4$, $R^5$ and $R^6$ independently of one another are hydrogen atoms or alkyl; and
index v = an integer from 1 to 15,
and the resulting products III containing aldehyde groups are reduced to the polyols III which are optionally partially or fully hydrogenated.

**6.** Coating material according to Claim 5, **characterized in that**

- as polyols (i) at least one hyperbranched compound obtainable by reacting 2,2-bishydroxymethyl-butane-1,4-diol with a dicarboxylic anhydride and then reacting the resulting intermediate with glycidyl esters of tertiary, highly branched, saturated monocarboxylic acids.
- as polyols (iii), positionally isomeric dialkyloctanediols, especially positionally isomeric diethyloctanediols, and
- as polyols (iv), hydroformylated and hydrogenated oligomers obtainable by (iv-1) metathesis of acyclic monoolefins and cyclic monoolefins, (iv-2) hydroformylation of the resulting oligomers, and (iv-3) subsequent hydrogenation, using cyclopentene as cyclic monoolefin and hydrocarbon mixtures obtained in petroleum processing by cracking ($C_5$ cut) as acyclic monoolefins, the polyols (iv) having a hydroxyl number (OHN) from 200 to 650, in particular from 250 to 450, a number-average molecular weight $M_n$ of from 400 to 1 000, in particular from 400 to 600, a mass-average molecular weight $M_w$ in the range from 600 to 2 000, in particular from 600 to 1 100 and a polydispersity $M_w/M_n$ of from 1.4 to 3, in particular from 1.7 to 1.9;

are used.

7. Coating material according to any of Claims 1 to 6, **characterized in that** the polyadducts (B) are branched oligoethers, oligoesters, oligocarbonates, oligourethanes, oligoureas, oligoamides, oligoimides or cooligomers containing ether, ester, carbonate, urethane, urea, amide and/or imide groups in the oligomer and/or oligomer chains.

8. Coating material according to Claim 7, **characterized in that** the oligoadducts (B) are branched oligomeric oligoesters, oligourethanes, oligoester-co-oligoethers, oligoester-co-oligocarbonates, oligoester-co-oligourethanes, oligoester-co-oligoamides, oligoester-co-oligoureas or oligoester-co-oligoimides, especially oligoesters.

9. Coating material according to Claim 8, **characterized in that** the oligoester is preparable by reacting at least one branched polycarboxylic acid with at least one monoepoxy ester and/or by reacting a polyol with a carboxylic anhydride and reacting the resulting intermediate with an epoxide.

10. Coating material according to Claim 9, **characterized in that** the polyadduct (B) is a polyol (i).

11. Coating material according to any of Claims 1 to 10, **characterized in that** it is crosslinkable thermally or both thermally and with actinic radiation (dual cure).

12. Use of the coating material according to any of Claims 1 to 11 in automotive OEM finishing and automotive refinish, in industrial coating, including coil coating, container coating, and the coating of electrical components, in the coating of plastics, and in furniture coating.

13. Use according to Claim 12, **characterized in that** the coating material is used for producing single-coat or multicoat clear or color and/or effect coating systems.

14. Single-coat or multicoat clear or color and/or effect coating systems producible using the coating material according to any of Claims 1 to 11.

15. Primed or unprimed substrates, especially motor vehicle bodies, industrial components and finished products, including coils, containers and electrical components, moldings of plastic, and furniture, comprising at least one single-coat or multicoat clear and/or color and/or effect coating system according to Claim 14.

**Revendications**

1. Matière de revêtement comportant un solvant, contenant

A) 5 à 70 % en poids, par rapport à la teneur en matière solide de la matière de revêtement, d'au moins un mélange de substances, pouvant être préparé par copolymérisation

A1) d'un mélange de monomères à insaturation oléfinique, contenant

a1) 1 à 90 % en poids, par rapport au mélange (A1), d'au moins un monomère cycloaliphatique et
b1) 0 à 90 % en poids, par rapport au mélange (A1), d'au moins un monomère contenant des groupes hydroxy,

la somme des quantités des monomères à insaturation oléfinique étant égale à 100 % en poids,
dans au moins un diluant réactif, contenant des groupes hydroxy, pour matières de revêtement réactives durcissables thermiquement, les diluants réactifs étant liquides à la température ambiante ;

B) 5 à 70 % en poids, par rapport à la teneur en matière solide de la matière de revêtement, d'au moins une résine de polyaddition (polyadduit) contenant des groupes hydroxy, ayant une masse moléculaire moyenne en nombre Mn de 800 à 3 500, ainsi que
C) 5 à 70 % en poids, par rapport à la teneur en matière solide de la matière de revêtement, d'au moins un agent de réticulation pour la réticulation thermique ;

la somme des quantités des composants (A), (B) et (C) étant égale à 100 % en poids.

2. Matière de revêtement selon la revendication 1, **caractérisée en ce qu'**on copolymérise le mélange (A1) à une

teneur en matière solide de la polymérisation d'au moins 70 % en poids, sur la base des monomères (a) utilisés, en le copolymère (A1).

**3.** Matière de revêtement selon la revendication 1 ou 2, **caractérisée en ce qu'**on utilise en tant que comonomères cycloàliphatiques (a1) l'acrylate, le méthacrylate, l'éthacrylate et/ou le crotonate de cyclohexyle, isobornyle, dicyclopentadiényle, octahydro-4,7-méthano-1H-indène-méthanol ou tert-butylcyclohexyle ou le monoacrylate, le monométhacrylate, le monoéthacrylate et/ou le monocrotonate de 1,4-bis(hydroxyméthyl)cyclohexane ou d'octahydro-4,7-méthano-1H-indène-diméthanol.

**4.** Matière de revêtement selon l'une quelconque des revendications 1 à 3, **caractérisée en ce qu'**on utilise des polyols en tant que diluants réactifs.

**5.** Matière de revêtement selon la revendication 4, **caractérisée en ce qu'**on utilise comme polyols

(i) des composés hyper-ramifiés comportant un groupe central tétrafonctionnel dérivé du ditriméthylolpropane, du diglycérol et/ou du ditriméthyloléthane, ou un groupe central tétrafonctionnel de formule générale I,

$$\mathbf{C[-A_q\text{-}X\text{-}]_m\ [-A_r\text{-}X\text{-}]_n\ [-A_s\text{-}X\text{-}]_o\ [-A_t\text{-}X\text{-}]_p} \qquad \text{(I)},$$

dans laquelle les indices et les variables ont les significations suivantes :
m+n+o+p =4 ; où
m représente un nombre entier allant de 1 à 3 et
n, o et p = 0 ou un nombre entier allant de 1 à 3 ;
q, r, s et t représentent un nombre entier allant de 1 à 5, q étant ≥ r, s, t, en particulier q étant > r, s, t ;

X = -O-, -S- ou -NH- ;
A = $-CR_2-$ ; où
R = -H, -F, -Cl, -Br, -CN, $-NO_2$, un radical alkyle ou halogénoalkyle en $C_1$-$C_3$ ou alcoxy en $C_1$-$C_3$ ou bien - lorsque q, r, s et/ou t = au moins 2 - R représente un radical alcanediyle et/ou oxaalcanediyle en $C_2$-$C_4$ qui comporte de 2 à 5 atomes de carbone et/ou un atome d'oxygène -O- qui relie par un pont 3 à 5 atomes de carbone du radical -A- ;

(ii) des oligoesters ramifiés qui sont obtenus par la réaction d'au moins un acide polycarboxylique ramifié avec au moins un monoépoxyester ;
(iii) des alcanes en $C_9$-$C_{16}$ qui sont fonctionnalisés avec au moins deux groupes hydroxy ou au moins un groupe hydroxy et au moins un groupe thiol ;
(iv) des polyols, pouvant être obtenus par hydroformylation d'oligomères de formule III,

$$\mathbf{R^3R^4C{=}[{=}CH\text{-}R^2\text{-}CH{=}]_v{=}CR^5R^6} \qquad \text{(III)}$$

dans laquelle $R^2 = -(CH_2-)_w-$
où l'indice w représente un nombre entier allant de 1 à 6, ou

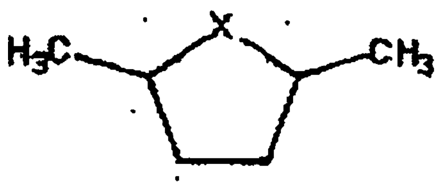

où X = $-CH_2-$ ou un atome d'oxygène ;
$R^3$, $R^4$, $R^5$ et $R^6$ représentent, indépendamment les uns des autres, des atomes d'hydrogène ou des groupe alkyle ; et
l'indice v représente un nombre entier allant de 1 à 15,

et réduction des produits III en résultant, contenant des groupes aldéhyde, en les polyols III, qui sont éventuellement partiellement ou totalement hydrogénés ;

**6.** Matière de revêtement selon la revendication 5, **caractérisée en ce qu'**on utilise

- en tant que polyols (I), au moins un composé hyper-ramifié, pouvant être obtenu par mise en réaction de 2,2-bis-hydroxyméthyl-butanol-1,4 avec un anhydride dicarboxylique et mise en réaction subséquente du produit intermédiaire résultant avec des esters de glycérol d'acides monocarboxyliques tertiaires saturés, fortement ramifiés,
- en tant que polyols (III), des dialkyloctanediols isomères de position, en particulier des diéthyloctanediols isomères de position, et
- en tant que polyols (IV), des oligomères hydroformylés et hydrogénés, pouvant être obtenus par (iv-1) métathèse de mono-oléfines acycliques et de mono-oléfines cycliques, (iv-2) hydroformylation des oligomères résultants et (iv-3) hydrogénation subséquente, avec utilisation de cyclopentène en tant que mono-oléfine cyclique et, en tant que mono-oléfines acycliques, de mélanges d'hydrocarbures qui sont obtenus (fraction en $C_5$) par craquage dans le traitement du pétrole, et les polyols (iv) présentant un indice de groupes hydroxy (IOH) de 200 à 650, en particulier de 250 à 450, une masse moléculaire moyenne en nombre $M_n$ de 400 à 1 000, en particulier de 400 à 600, une masse moléculaire moyenne en poids $M_w$ dans la plage de 600 à 2 000, en particulier de 600 à 1 100 et une polydispersité $M_w/M_n$ de 1,4 à 3, en particulier de 1,7 à 1,9.

**7.** Matière de revêtement selon l'une quelconque des revendications 1 à 6, **caractérisée en ce que** les polyadduits (B) sont des oligoéthers, oligoesters, oligocarbonates, oligo-uréthannes, oligo-urées, oligoamides, oligo-imides ou co-oligomères, ramifiés, qui contiennent des groupes éther, ester, carbonate, uréthanne, urée, amido et/ou imido dans les chaînes oligomères et/ou des chaînes oligomères.

**8.** Matière de revêtement selon la revendication 7, **caractérisée en ce que** les polyadduits (B) sont des oligoesters, oligo-uréthannes, oligoester-co-oligoéthers, oligoester-co-oligocarbonates, oligoester-co-oligo-uréthannes, oligoester-co-oligoamides, oligoester-co-oligo-urées ou oligoester-co-oligo-imides, oligomères ramifiés, en particulier des oligoesters ramifiés.

**9.** Matière de revêtement selon la revendication 8, **caractérisée en ce que** l'oligoester peut être préparé par la mise en réaction d'au moins un acide polycarboxylique ramifié avec au moins un monoépoxyester et/ou par la mise en réaction d'un polyol avec un anhydride d'acide carboxylique et la mise en réaction du produit intermédiaire résultant avec un époxyde.

**10.** Matière de revêtement selon la revendication 9, **caractérisée en ce que** le polyadduit (B) est un polyol(i).

**11.** Matière de revêtement selon l'une quelconque des revendications 1 à 10, **caractérisée en ce qu'**elle est réticulable thermiquement ou thermiquement et par un rayonnement actinique [double durcissement (*Dual Cure*)].

**12.** Utilisation de la matière de revêtement selon l'une quelconque des revendication 1 à 11, dans la première mise en peinture et le peinturage de réparation d'automobiles, le peinturage industriel, y compris le peinturage de rubans continus *Coil Coating,* le peinturage de récipients *Container Coating* et le revêtement de composants électrotechniques, le peinturage de matières plastiques et le peinturage de meubles.

**13.** Utilisation selon la revendication 12, **caractérisée en ce que** la matière de revêtement est utilisée pour la production de revêtements de peinture mono- ou multicouches, incolores ou colorants et/ou à effet.

**14.** Revêtements de peinture mono- ou multicouches, incolores ou colorants et/ou à effet, pouvant être produits avec utilisation de la matière de revêtement selon l'une quelconque des revendications 1 à 11.

**15.** Subjectiles, en particulier carrosseries de véhicules automobiles, composants industriels et produits finis, y compris rubans continus, récipients et composants électroniques, pièces moulés en matière plastique et meubles, munis ou non d'un primaire, comportant au moins un revêtement de peinture mono- ou multicouche, incolore et/ou colorant et/ou à effet selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0638591 A
- DE 4407415
- DE 19805421
- EP 0819710 A
- WO 9730099 A
- WO 9620968 A
- DE 3807571 A
- DE 3706095 A
- EP 0358153 B
- US 4754014 A
- DE 4421823 A
- WO 9222615 A
- WO 9317060 A
- WO 9612754 A
- EP 0502839 A
- DE 19709465 A
- DE 19709476 C
- DE 2848906 A
- DE 19524182 A
- EP 0554783 A
- WO 9527742 A
- WO 8202387 A
- US 4444954 A
- US 4939213 A
- US 5084541 A
- EP 0624577 A
- US 4710542 A
- EP 0245700 B
- EP 0596460 A
- DE 3636183 A
- EP 192304 A
- DE 2359923 A
- DE 1805693 A
- WO 9422968 A
- DE 2751761 C
- WO 9712945 A
- EP 0276501 A
- EP 0249201 A
- EP 0008127 A
- DE 19809643 A


### In der Beschreibung aufgeführte Nicht-Patentliteratur


- Römpp Lexikon Lacke und Druckfarben. Georg Thieme Verlag, 1998, 598, 605, 606
- Römpp Lexikon Lacke und Druckfarben. Georg Thieme Verlag, 1998, 605, 606
- **G. R. NEWKOME ; C. N. MOOREFIELD ; F. VÖGTLE.** Dendritic Molecules, Concepts, Syntheses, Perspectives. VCH, 1996
- **M. SCHUSTER ; S. BLECKERT.** *Angewandte Chemie,* 1997, vol. 109, 2124-2144
- **R H. GRUBBS.** Comprehensive Organometallic Chemistry. Pergamon Press, Ltd, 1982, vol. 8, 499 ff
- **R. R. SCHROCK.** *Accounts of Chemical Research,* 1990, vol. 23, 158 ff
- *Angewandte Chemie,* 1995, vol. 107, 2179 ff
- *Journal of the American Chemical Society,* 1996, vol. 118, 100 ff
- *Journal of the Chemical Society, Chemical Communications,* 1995, 1127 ff
- Ullmanns Enzyklopädie der technischen Chemie. 1951, vol. 1, 743 ff
- Römpp Lexikon Lacke und Druckfarben. Georg Thieme Verlag, 1998, 457
- **HOUBEN-WEYL.** Methoden der organischen Chemie. Georg Thieme Verlag, 1963, vol. 14/2, 61-70
- **W. SIEFKEN.** *Liebigs Annalen der Chemie,* vol. 562, 75-136
- Römpp Lexikon Lacke und Druckfarben. Georg Thieme Verlag, 1998, 29
- **JOHAN BIELEMAN.** Lackadditive. Wiley-VCH, 1998, 242 ff
- Paints, Coatings and Solvents. Wiley-VCH, 1998, 80 ff
- **B. SINGH ; MITARBEITER.** Carbamylmethylated Melamines, Novel Crosslinkers for the Coatings Industry. *Advanced Organic Coatings Science and Technology Series,* 1991, vol. 13, 193-207
- Römpp Lexikon Lacke und Druckfarben. Georg Thieme Verlag, 1998, 176
- Rompp Lexikon Lacke und Druckfarben. Georg Thieme Verlag, 1998, 250 ff
- Römpp Chemie Lexikon. Georg Thieme Verlag, 1991, vol. 4
- Römpp Lexikon Lacke und Druckfarben. Georg Thieme Verlag, 1998, 444-446
- Römpp Lexikon Lacke und Druckfarben. Georg Thieme Verlag, 1998, 250-252

- *farbe + lack,* 1992, vol. 11, 829 ff
- Lackadditive. Wiley-VCH, 1998
- UV and E.B. Curing Formulations for Printing Inks. **R. HOLMES.** Coatings and Paints, SITA Technology. Academic Press, 1984
- **P. BETZ ; A. BARTELT.** *Progress in Organic Coatings,* 1993, vol. 22, 27-37